(19) Europäisches Patentamt
European Patent Office
Office européen des brevets

(11) **EP 2 887 268 A1**

(12) **EUROPEAN PATENT APPLICATION**
published in accordance with Art. 153(4) EPC

(43) Date of publication:
**24.06.2015 Bulletin 2015/26**

(51) Int Cl.:
*G06K 19/06* (2006.01)     *G06K 1/12* (2006.01)
*G06K 7/10* (2006.01)

(21) Application number: **12876213.5**

(22) Date of filing: **03.10.2012**

(86) International application number:
**PCT/JP2012/076555**

(87) International publication number:
**WO 2013/168305 (14.11.2013 Gazette 2013/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **09.05.2012   CN 201210140384**

(71) Applicant: **Apollo Japan Corporation
Yokohama-shi, Kanagawa 230-0046 (JP)**

(72) Inventors:
• **GU Zecang
Yokohama-shi
Kanagawa 230-0051 (JP)**
• **KISHIGAMI Ikuko
Yokohama-shi
Kanagawa 230-0051 (JP)**

(74) Representative: **advotec.
Patent- und Rechtsanwälte
Widenmayerstrasse 4
80538 München (DE)**

(54) **MOBILE PHONE INFORMATION EMBEDDING CODE GENERATION METHOD, INFORMATION EMBEDDING METHOD AND READING METHOD FOR SAME**

(57)     In the field of information processing, the invention is related to an information embedded code, a method for generating an information embedded code, a method for embedding the code, and a method for reading the same. The invention is characterized by enabling distinguishing of product authenticity under natural light and using a standard mobile phone, and solves the problem of unifying authenticity identification for a general consumer and authenticity identification of an expert. An information embedded code is configured from a dot pattern enabling multi bits information to be written on the basis of the geometric placement or physical placement of an information dot relative to a specified reference dot. By adapting a new type of vertically-horizontally integrated virtual reference line the information embedded code according to this invention is capable of increasing the efficiency of code information recording.

## FIG. 1

```
DATA READING
      ↓
CODE CONVERSION
      ↓
INFORMATION
EMBEDDING OUTPUT
```

**Description**

Background of the invention

The present invention relates to the field of information processing, and more particularly, relates to a method for generating information code to be embedded in a printed materials which is readable by a mobile phone, a method for embedding the information code, and a method for reading the information code embedded in the printed materials

Background Art

With the rapid development of computer technologies and information network technologies, there have been progressively developed Internet technologies which focus on the recognition of two-dimensional codes by mobile phones and networks.

Recently, in order to record large-volume of voice data on two-dimensional barcodes, a patent application for a dot code capable of combining a plurality of two-dimensional rectangular barcodes, each of which is configured by placing fine dots in a matrix form, without limitation, is published in Japan. That is named "APPARATUS FOR READING OPTICALLY-READABLE TWO-DIMENSIONAL BARCODE" (JP 2005-243047 A). By using those codes, it could be realized to record voice date on the codes. However, since requirement of the capacity for storing voice data is large, the area of the codes on which relevant large-capacity information is recorded becomes large. Therefore, a reading apparatus, which has been designed at that time, scans the codes by sliding on the codes for reading the codes entirely, thereby leading to poor operability. At that time, the inventor of the patent has invested a large amount of funds in order to distribute the technology, but has failed to get expected effects.

Also, the patent application entitled "TWO-DIMENSIONAL CODE, TWO-DIMENSIONAL CODE READING METHOD, PROGRAM, AND COMPUTER-READABLE RECODING MEDIUM" (JP 2011-198371 A) in which there is disclosed a two-dimensional code capable of recording a large amount of voice data, which may be called "a voice code" is published in Japan. The two-dimensional code records information by using a fine dot in one rectangle. A reading apparatus can read a very fine dot matrix symbol in a contact manner. Such a code is capable of being used mainly for guiding for blind people in a public pace or a hospital. However, the code still requires a dedicated space for a two-dimensional code, and is not different from existing codes.

As a technology of increasing a capacity of recording information of a two-dimensional code, in Japan, there are published the patent applications related with a color two-dimensional code, which are respectively entitled "COLORED TWO-DIMENSIONAL CODE" (JP 2006-178692 A) and "METHOD FOR CREATING AND METHOD FOR DECODING TWO-DIMENSIONAL COLOR CODE" (JP 2011-186613 A). The technologies could increase a capacity of recording barcode information through a color barcode signal. However, since a dedicated space for a barcode is still required, there is limitation in the size of the area of the barcode. In particular, in terms of the practical use of the code, there are problems that the code is not adaptive to high-speed printing and the code cannot be printed by a monochrome printer of which the accuracy is low and the price is low.

Also, a single type of special two-dimensional code is referred to as "a color bit code", which is announced also by a Japanese inventor. There is filed as the patent application entitled "OPTICAL RECOGNITION CODE, RECOGNITION SYSTEM, METHOD, AND PROGRAM" (JP 2008-287414 A). The code is similar to a one-dimensional barcode and all symbols may be realized by colors. Since the color symbol has been introduced, it is possible to simultaneously read multiple codes by a high-accuracy camera. In particular, when a plurality of products are stocked in a warehouse, the codes of all products are readable by a computer at a time, and therefore, it is very suitable for warehousing of products. However, there are remained many assignment with respect to its application.

In order for adaption of reading a two-dimensional code by mobile phones, a two-dimensional code with aesthetic appearance and a two-dimensional code having product attributes are necessary. Thus, a two-dimensional code with decorativeness is generated. The application entitled "MARKED TWO-DIMENSIONAL CODE" (JP 2009-104451) is filed in Japan. In an ordinary two-dimensional code technology, although a portion of the code is broken, error correction is executed. Therefore, a characteristic mark of a product is printed on the ordinary two-dimensional code by using a characteristic that does not affect normal reading. This invention is certainly valuable to some degree for application. However, it is just one application example of a two-dimensional code, rather than the invention of a new code.

As a previously existing code, there is a code called "an angle code". In Japan, there is published the patent entitled " TWO-DIMENSIONAL CODE IMAGE MODEL READABLE BY READER, DISPLAY MEDIUM FOR MAP, READING SYSTEM AND READING METHOD" (Japanese Patent NO. 2008-225732). In the technology, there is provided a code in which dot matrix displacement is made in the format of polar coordinates. Such a code format is merely one of other expression methods for a two-dimensional code, and does not contribute to accelerated progress in terms of technologies and practical usage. At the present time where two-dimensional codes has been spread and standardization has been highly advanced, there in a need for remarkable progress of the two-dimensional codes.

Since the 2000s, code technologies have been developed remarkably. As the most important characteristics, first, an information embedded code has been developed, which does not need to occupy a space unlike an existing two-dimensional code requiring a dedicated space. Second, in an existing two-dimensional code, one-symbol (bar) writes only one-bit information, but a new code, in which one symbol is capable of writing multibit information, has been developed. Patents associated with code technologies which are well known at the present time are present as follows.

There is an international patent application (PCT/SE00/01895) entitled "ENCODED PAPER FOR OPTICAL READING" filed by Anoto Ab in Sweden. The patent application can write four numbers, that is, two bits by placing information bits at four positions around one virtual cross line with respect to the center of the virtual cross line. Due to the patent application, it is possible to embed coordinate information in a paper by printing dot matrix on the paper fully. Thus, when writing is made on the paper using a pen equipped with an optical reader, information on written letters or the like can be directly input to a computer. It is unfortunate that, since a reference considered by the inventor of the code is virtual, and also, two coordinate positions around coordinates are one certain number in the case of embedding the coordinate information, the position of the coordinates can be read, but it is impossible to read the code directly at a time unlike a general two-dimensional code.

The founder of Grid of Japan immediately has found out a defect in the patent of Anoto Ab in Sweden, and has filed the international patent application entitled "METHOD FOR REALIZING INPUT/OUTPUT OF INFORMATION USING DOT MATRIX MODEL" (PCT/JP2003/012364). However, the defect that there is no reference dot in the patent of Anoto Ab in Sweden has been excessively corrected. The patent application proposes that, since four reference dots are placed at four vertexes of a rectangle, grid lines are configured by connecting dots also called four grid dots, and placement can be performed at eight positions around an intersection of the grid lines, it is possible to write eight numbers, that is, 3-bit information. However, the reference dots are unnecessarily many. In the technology of the patent application, when one reference dot is removed, the virtual center is not formed, which is fully different from the technology. Also, with the effect of a method of expressing the virtual intersection of Anoto Ab in Sweden, there is no choice but to mention a large amount of virtual grids, virtual grid lines, or the like even in the subsequent application patents. Such an extreme patent right does not attack other patents even when the patent light is infringed since favorable evidence cannot be submitted. In addition, the patent asserts that one information dot is capable of writing eight-bit information, but in practice, the same interval needs to be secured between respective positions of information bits according to a sampling theory. When the theory is broken, there is a problem that it is easy to be erroneously recognized. Therefore, it is reasonable to record 2-bit information. If the above structure is realized, the efficiency of recording information is rather reduced, and therefore, the gray scale of a background pattern is increased, thereby affecting the image quality of an image.

The above two patent applications are representative of developments in the fields of multimedia applications of a pen-type touch reader, that is, a touch-type reading pen. From an international perspective, a main market for a technology of embedding information in a printed image is a copy machine industry. International big enterprises in copy machines competitively file patents with respect to a technology of embedding bulk information in an printed image in order to resolve a trouble social problem that information on a paper medium is leaked.

The largest copy machine maker in the world has filed the patent application entitled "image forming apparatus" (JP 9-172537). The patent application discloses a method of writing 1-bit information by a different position, a different size, a different direction, and a different shape of a geometric form. However, when it is actually used, a printing grid is very small, and also, noise is large, thereby causing a problem in commercialization.

In 2000, a printer company in Japan proposes a code called "Val-Code" and files the patent application entitled "DIGITAL ELECTRONIC WATERMARK APPARATUS, DIGITAL ELECTRONIC WATERMARK IDENTIFICATION APPARATUS, DIGITAL ELECTRONIC WATERMARK EMBEDDING METHOD, AND DIGITAL ELECTRONIC WATERMARK IDENTIFICATION METHOD" (JP 2003-20967 A). The patent application introduces dot matrix permutations in a propagation direction of which the physical form is different to perform embedding of 1-bit information direction physical form, and accurately extracts the propagation direction of an information dot matrix in a dot matrix on which a large noise is printed. This is definitely a high level of invention. However, when the dot matrix in the propagation direction of which the different physical form different is used, it is necessary to place the dot matrix which is not related with recording of a large amount of information in its vicinity, thereby causing a problem that the efficiency of recording information is low.

The above-described existing methods for embedding information in an image on a printed matter all do not consider the characteristics of a printing screen. In particular, in an application in the fields of copy machines, it is not considered to embed multipurpose information in a single type of background pattern. Also, it is not proposed to directly embed information in a printed image. Furthermore, it is also not considered to maximize the efficiency of information embedding and an information capacity.

Since 2000, there have been patents on screen codes such as "Method for Embedding Screen Code Capable of Saving Large Amount of Data on Paper" (JP 3829143 B1) and "Information Embedded Code, Method for Generating Information Embedded Code and Device for Generating Information Embedded Code" (JP 4054339) that are representative inventions of embedding information in printed images. These patents allow large-volume information to be embedded without degrading the quality of images on printed matters in terms of embedding information directly in the images. Embedding of multibit information is thus realized by varying the geometric configuration of grids for printing such as different positions, different shapes, different directions, and different numbers while maintaining the grid gradation in printing.

Also, as a patent of a screen code, there is proposed a method of embedding multi bit information by a different modulation scheme of a grid or phase modulation of a grid, while not changing a gray scale of the grid.

Specifically, in order to form a background pattern capable of writing index information of reproduction contents used for K-version printing, as an application of the touch-type reading pen, embedding of 2-bit information is realized by placing a grid at a different position while not changing a gray scale of each grid with respect to an image of the background pattern having the same dot size and the same interval. Data which writes one set of index information provided therein can realize embedding of 50-bit information by a $6 \times 6$ dot matrix.

As specific applications of an information security countermeasure function product in copy machines, it is applicable to functions, such as a function of floating a latter which enables an original document and a copied document to be distinguished in the same background pattern, a function of tracking by which PC a copy prevention function file of a secret document is generate, and an automatic reading function capable of automatically reading a document in which digital data of printing contents is embedded and printed in a background pattern. Such a multipurpose background pattern can be configured by a screen code.

The above-described two-dimensional code is automatically picked up by using a mobile phone under natural light and is automatically connected to a net, and the picked-up two-dimensional code has a forgery prevention function. In particular, in the field of forgery prevention, it is an agent solution to realize unification of identification methods to allow a general consumer to identify forgery like an expert, by using recognition of mobile phones.

Patent Literature 1: "READER CAPABLE OF OPTICALLY READING TWO-DIMENSIONAL CODE" (JP 2005-243047 A)

Patent Literature 2: the patent entitled "VOICE CODE" is published in Japan, "TWO-DIMENSIONAL CODE, METHOD OF READING THE SAME, PROGRAM, AND COMPUTER-READABLE RECODING MEDIUM" (JP 2011-198371 A)

Patent Literature 3: "COLORED TWO-DIMENSIONAL CODE" (JP 2006-178692 A)

Patent Literature 4 : "METHOD FOR CREATING AND METHOD FOR DECODING TWO-DIMENSIONAL COLOR CODE" (JP 2011-186613 A)

Patent Literature 5: "OPTICAL RECOGNITION CODE, RECOGNITION SYSTEM, METHOD, AND PROGRAM" (JP 2008-287414 A)

Patent Literature 6: "MARKED TWO-DIMENSIONAL CODE" (JP 2009-104451 A)

Patent Literature 7 : "ENCODED PAPER FOR OPTICAL READING" (PCT/SE00/01895)

Patent Literature 8: "METHOD FOR REALIZING INPUT/OUTPUT OF INFORMATION USING DOT MATRIX MODEL" (PCT/JP2003/012364)

Patent Literature 9: "IMAGE FORMING APPARATUS" (JP 9-172537 A)

Patent Literature 10: "DIGITAL ELECTRONIC WATERMARK APPARATUS, DIGITAL ELECTRONIC WATERMARK IDENTIFICATION APPARATUS, DIGITAL ELECTRONIC WATERMARK EMBEDDING METHOD, AND DIGITAL ELECTRONIC WATERMARK IDENTIFICATION METHOD" (JP 2003-20967 A)

Patent Literature 11: "METHOD FOR EMBEDDING SCREEN CODE CAPABLE OF STORING LARGE AMOUNT OF DATA ON PAPER" (patent number 3829143)

Patent Literature 12: "INFORMATION EMBEDDED CODE, AND METHOD AND DEVICE FOR GENERATING INFORMATION EMBEDDED CODE" (patent number 4054339)

Summary of the Invention

Object of the Invention

A first object of the present invention is to provide a structure of an information embedded code for mobile phones that is an anti-counterfeit code allowing automatic network connection and authenticity determination when an image having information embedded therein is captured under natural light by using a camera of a common mobile phone. Furthermore, the first object includes integrating an anti-counterfeit code and a product mark.

A second object of the present invention is to provide a method for constructing an invisible information embedded code for mobile phones capable of efficiently describing information.

A third object of the present invention is to present an anti-counterfeit system or a printing multimedia system capable of authenticity determination by capturing an image having information embedded therein under natural light through a special lens attached to a camera of a common mobile phone.

In order to solve the above problem, the invention according to claim 1 is a mobile phone information embedded code generation method, wherein

a mobile phone information embedded code is configured from a dot pattern enabling multi bit information to be written on the basis of the geometric placement or physical placement of an information dot relative to a specified reference dot, the mobile phone information embedded code configures: a dot pattern capable of writing information and printed or coated by a special ink, in which an RGB color space of an image scanned by at least one type of a scanner cannot be directly converted into a CMYK color space, the special ink including a thermal ink, a sun-sensitive color-changing ink, an OVI (optically variable) ink, a luminous ink, a water-sensitive color-changing ink, an infrared fluorescence ink, an ultraviolet fluorescence ink, a visible-light fluorescence ink, an ink of an absorption wavelength different from a background image, an ink of a reflection wavelength different from the background image, and an ink of a reflection angle different from the background image, or

a dot pattern capable of writing information and printed by convex or concave point distributions of different densities, or

a dot pattern capable of writing information and configured by strictly controlling one type of format among a diffusion direction of light, a reflection direction of light, and a refraction direction of light, or

a dot pattern capable of writing information and configured by a laser marker, or

a dot pattern capable of writing information and configured by a hologram, or

a dot pattern capable of writing scan-prohibited information when placing at least one type of viewer with respect to an image to be read, the viewer including one polarization plate, a micro lens, and an optical interference plate, and

an electronic file of an image for printing of the mobile phone information embedded code is configured by one type of an image format or a font format.

In order to solve the above problem, the invention according to claim 2 is a horizontally-vertically integrated mobile phone information embedded code generation method, wherein

a dot pattern configures one dot matrix, including a result of dot combination to minimize a printing area with respect to placement of different positions, placement of different phase modulations, or ordinary two-dimensional code, so as to record multi-bit information,

in a matrix arrangement of the dot pattern, a virtual reference line is horizontally and vertically integrated, and a reference dot is placed at regular intervals with respect to the virtual reference line, and

in the dot pattern, microcells capable of being placed in information dots are microcells surrounded by a center microcell.

In order to solve the above problem, the invention according to claim 3 is an information embedding method of embedding a mobile phone information embedded code by a laser marker wherein

a background configuring a mobile phone information embedded code by a laser marker device forms a background layer by a black ink, a temperature-sensitive ink, a sun-sensitive color-changing ink, an OVI (optically variable) ink, a luminous ink, a water-sensitive color-changing ink, an infrared fluorescence ink, an ultraviolet fluorescence ink, a visible-light fluorescence ink, an infrared absorption ink, an ultraviolet absorption ink, an ink of an absorption wavelength different from a background image, an ink of a reflection wavelength different from the background image, and an ink of a reflection angle different from the background image, and is a hologram, a metal, a glass, a paper, or a resin,

the background configuring the mobile phone information embedded code by the laser marker device is configured from a dot pattern capable of writing multi-bit information based on geometric placement or physical placement of information dot with respect to a specified reference dot, and

in the mobile phone information embedded code, an electronic file of an image for the laser marker device is configured by one type of an image format or a font format.

In order to solve the above problem, the invention according to claim 4 is a reading method of a mobile phone information embedded code, wherein

an additional lens is provided in front of a camera lens of a mobile phone; an image information-embedded by a mobile phone information embedded code is read through the additional lens, and

a code value of the mobile phone information embedded code is identified based on a rule of configuring a dot pattern writing multi-bit information by geometric placement or physical placement of information dot with respect to a specified reference dot.

As the invention according to claim 5, the geometric placement has at least one type of geometric characteristic with respect to placement of information dot, the geometric characteristic including whether or not information dots are present, whether or not information dots are at different positions, whether or not information dots are in different directions, whether or not information dots have different shapes, whether or not information dots are different in number, whether or not information dots are different in size, centralized or dispersed distribution, and a placement of information dot configured by a combination of two-dimensional codes, thereby capable of writing information.

Due to such a structure, the information bit can write multi-bit information by the geometric placement, and a large amount of information can be written by small dots.

As the invention according to claim 6, the physical placement has at least one type of physical characteristic with respect to placement of information dot, the physical characteristic including different phase modulation (PM) results of the information dot, different modulation (AM/FM) results of the information dot, different propagation directions of the information dot, different vectors of dynamics, and different frequencies of the information dot.

Due to such a structure, the information bit can write multi-bit information by the physical placement, and a large amount of information can be written by small dots. Also, when there is initial information, a code value of the information dot can be calculated. Therefore, the number of reference dots is reduced.

Merit and positive effect of the present invention:

the mobile phone information embedded code generated using the mobile phone information embedded code submitted by the present invention is characterized by enabling distinguishing of product authenticity under natural light and using a standard mobile phone, and solves the problem of unifying authenticity identification for a general consumer and authenticity identification of an expert.

Also, the mobile phone information embedded code generation method of the horizontally-vertically integrated reference dot proposed by the present invention submitted a new type of dot pattern that writes multibit information by different position placement of information dot or a placement of a phase modulation result with respect to a placement of a reference dot of a single reference direction. The efficiency of information recording can be improved.

Also, the present invention proposes the information embedding method of the mobile phone information embedded code by the laser marker device, wherein a anti-counterfeit code can be configured using an existing laser marker device.

Furthermore, the reading method of the mobile phone information embedded code proposed by the present invention can read the mobile phone information embedded code that does not look cheap. Due to this technology, the multimedia of the printing can be spread and a general consumer can determine an authenticity of a product.

Detailed Description of the Invention

Hereinafter, embodiments of the present invention will be described in detail with reference to the drawings, but the embodiments of the present invention are for purposes of description and are not intended to limit the present invention.

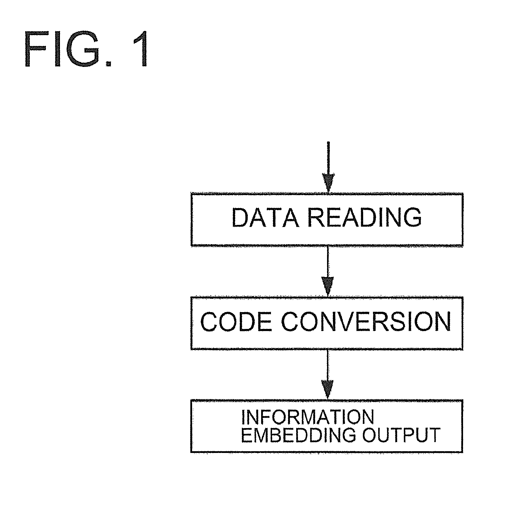

Fig. 1 is a flowchart that illustrates a process of generating a mobile phone information embedded code. As illustrated in Fig. 1, the process is configured by three steps.

The first step is a data reading step of a mobile phone information embedded code. An encrypted random anti-counterfeit code of a computer, or a anti-counterfeit code configured by information such as an attribute of a product, a production date, a place of production, and a sales permission region is read.

The second step is a code conversion step of the mobile phone information embedded code. The above-described read mobile phone information embedded code is converted into a dot pattern placed by a geometrically characteristic form or a physically characteristic form.

The above-described dot pattern placed by the geometrically characteristic form is a structure of a dot pattern capable of describing information because the placement of the information dot in the grid has at least one type of geometric characteristic.

The geometric characteristic includes whether or not information dots are present, whether or not information dots are at different positions, whether or not information dots are in different directions, whether or not information dots have different shapes, whether or not information dots are different in number, whether or not information dots are different in size, centralized or dispersed distribution, and a placement of information dot configured by a combination of two-dimensional codes.

The above-described dot pattern placed by the physically characteristic form is a structure of a dot pattern capable of describing information because the placement of the information dot has at least one type of physical characteristic.

The physically characteristic form includes a structure in which results of phase modulation (PM) of the information dots are different, results of AM/FM modulation are different, propagation directions are different, vectors of dynamics are different, or frequencies are different.

The code pattern of the mobile phone information embedded code described above includes ordinary QR two-dimensional codes, DM two-dimensional codes, PDF 417 two-dimensional codes, and a two-dimensional code generated a dot pattern configured by selecting some combinations from all combinations of dot placements of ordinary two-dimensional codes, based on a specified purpose. For example, a GM two-dimensional code, a speech pen two-dimensional code called an OID1, or the like belongs to a dot pattern configured by a combination of two-dimensional codes.

Information dots configuring the above-described mobile phone information embedding dots are placed at different positions with respect to a reference dot. There are many methods of determining the reference dot, but all structures that write information by different positions of the information dots fall within the technical scope of the present invention.

The above-described mobile phone information embedded codes include those configured by dot patterns in which information dots are placed in different directions, at different distances, and at different positions with respect to a virtual intersection point of a virtual cross line. Examples of the dot pattern include those in which information dots are placed in different directions, at different distances, and at different positions with respect to a virtual center formed by a reference line that connects four vertexes of a rectangle, so-called "grid points". Also, the mobile phone information embedded codes include all information embedded codes configured by dot patterns in which information dots are placed in different directions, at different distances, and at different positions with respect to various reference dots, which actually exist, or a virtual reference dot.

The last step is an information embedding output step of the mobile phone information embedded code and is an operation of printing the mobile phone information embedded code. This operation realizes printing using an ordinary offset printing machine, an ordinary letterpress printing machine, an ordinary intaglio printing machine, an ordinary screen printing machine, an ordinary digital printing machine, or an ordinary printer.

A method of assigning the mobile phone information embedded code online in a product packing line can be performed using an inkjet system or a laser marker.

The mobile phone information embedded code is generated by a thermal ink, a sun-sensitive color-changing ink, an OVI (optically variable) ink, a luminous ink, a water-sensitive color-changing ink, an infrared fluorescence ink, an ultraviolet fluorescence ink, a visible-light fluorescence ink, an ink of an absorption wavelength different from a background image, or an ink of a reflection wavelength different from a background image, for example, a special ink, such as an ink of a reflection angle different from a background image, in which an RGB color space formed by a scan of at least one type of a scanner cannot be directly converted into a CMYK color space; or generated by a printing of placement of convex points or concave points having different densities; or generated by a digital engraving of placement of convex points or concave points having different densities; or generated by a strict control of one format between a diffusion direction of light and a reflection direction of light; or generated by a laser marker; or generated by a hologram; or generated through at least one type of a viewer including one polarizer, a micro lens, or an optical interference plate, which is previously installed, with respect to an image to be read.

The mobile phone information embedded code can be formed as follows.

First, in a case where the mobile phone information embedded code is generated by the laser marker, one background color layer is previously printed on a region to be generated in advance by using a thermal ink, a sun-sensitive color-changing ink, an OVI (optically variable) ink, a luminous ink, a water-sensitive color-changing ink, an infrared fluorescence ink, an ultraviolet fluorescence ink, a visible-light fluorescence ink, an ink of an absorption wavelength different from a background image, an ink of a reflection wavelength different from a background image, or a special ink, such as an ink of a reflection angle different from a background image, in which an RGB color space of an image read by at least one type of a scanner cannot be directly converted into a CMYK color space.

Furthermore, a cover layer is printed using a white ink or an ink having a property different from the above-described special ink. When irradiated by a strong laser, the cover layer is peeled and a background color printed by the special ink is appeared. Therefore, the mobile phone information embedded code can be formed.

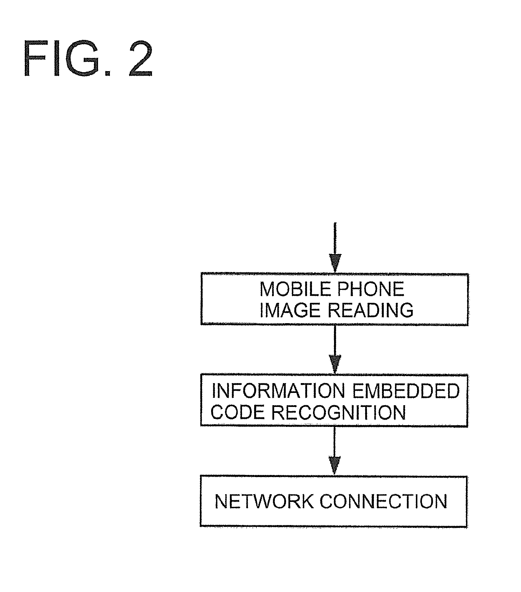

Fig. 2 is a flowchart that illustrates a mobile phone information embedded code reading method.

As illustrated in Fig. 2, a mobile phone information embedded code reading method on the Internet is configured by three steps.

The first step is a mobile phone image reading step. An image of the mobile phone information embedded code, which is printed on a printing medium, such as a forgery prevention label, a certificate of tax payment, or a print-multimedia printed matter, is read through an image sensor, such as a CCD or a CMOS, which is mounted on the mobile phone.

Here, in order to read a fine dot pattern, another additional lens is provided in front of a camera lens of the mobile phone, and the image with information embedded by the mobile phone information embedded code is read through the additional lens.

A reading illumination condition of the mobile phone selects one illumination method, including a natural light illumination, an infrared illumination, and an ultraviolet illumination, based on the mobile phone information embedded code generation method.

The next step is a mobile phone information embedded code recognizing step. A code value of the mobile phone information embedded code is recognized based on different rules of a geometric or physical form placement of the mobile phone information embedded code.

The last step is a network connection step. The mobile phone is connected to a network, and forgery prevention information or multimedia content data corresponding to the code value of the mobile phone information embedded code read from a server is extracted and displayed on a screen of the mobile phone. Alternatively, various social activities can be performed by information related to the read code value. Also, the social activities by the net operation include product tracking by the net connection, net shopping by the net connection, net search by the net connection, product price search by the net connection, product authenticity search by the net connection, and prevention of product lateral flow through online monitoring of product sales by the net connection.

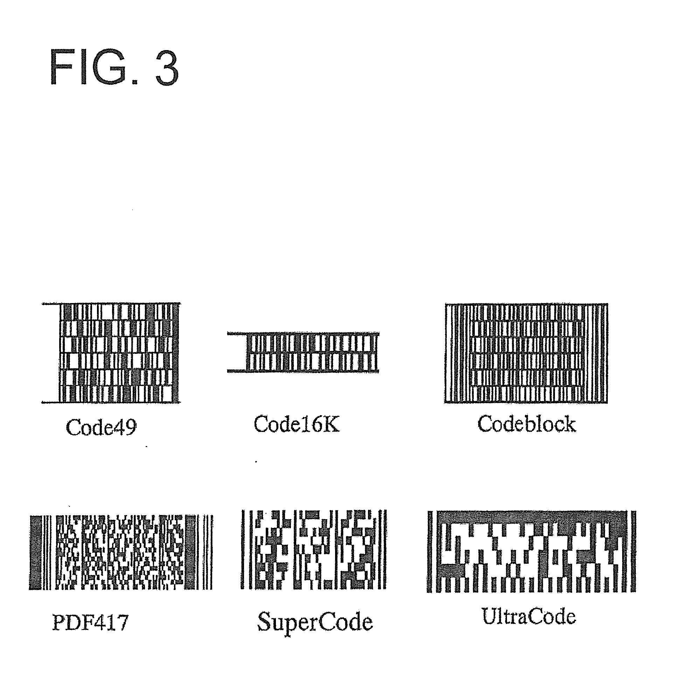

Fig. 3 is a diagram describing stacking-type two-dimensional codes that are internationally adopted sometime at the present time.

As illustrated in Fig. 3, the world's first stacking-type two-dimensional code, that is, Code49, was invented by Intermec of U.S. in 1987. The structure of this type of code is an extension of one-dimensional barcode and has no special technical characteristic. However, this structure became the international standard and has been applied up to now.

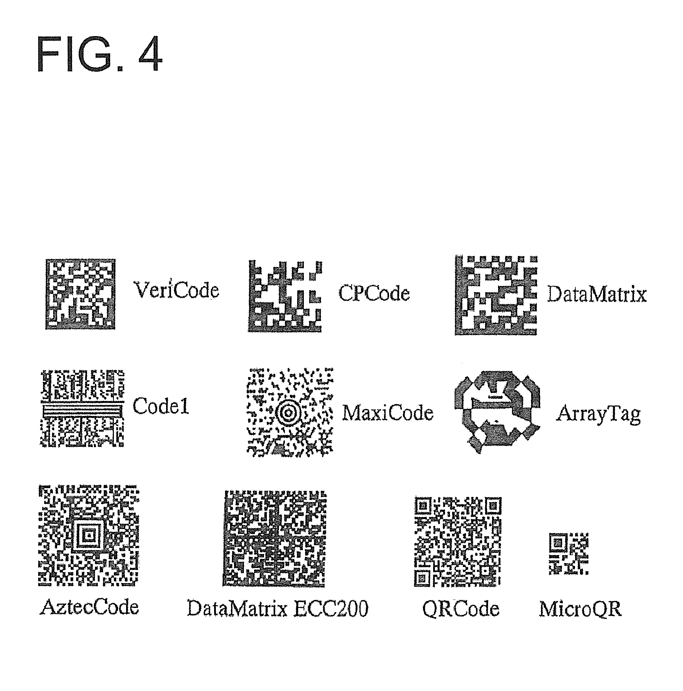

Fig. 4 illustrates a diagram of matrix-type two-dimensional codes that are internationally adopted at the present time.

VeriCode of Fig. 4, the world's first matrix-type two-dimensional code, that is, Vericode, was invented by Veritec in 1982. The technical value is higher than the above-described stacking-type two-dimensional code, became the international standard, and is widely applied over the world.

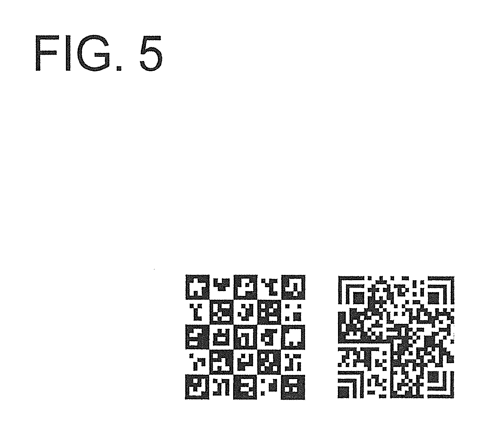

Fig. 5 illustrates a diagram of two types of two-dimensional codes announced in China.

A "GM two-dimensional code" illustrated in Fig. 5, which became the standard of the two-dimensional code industry in China, divides a dot of an ordinary two-dimensional code into several "macro-blocks", and black or white boundaries are installed in boundary lines of adjacent macro-blocks. Therefore, the identification of information is relatively convenient, and the appearance of the code is neater than the conventional two-dimensional code. However, since a lot of boundaries are required, the efficiency of writing information is bad. In particular, such a two-dimensional code is not provided with a reference dot. Therefore, as a size of a symbol becomes small, the printing precision is lowered. In this case, there is a problem that a recognition error will easily occur.

A "Han Xin code" suggested by the National Code Committee of China has an appearance very similar to that of the QR barcode. Since the Han Xin code is suggested by the national authority, it is considered that it is worthy of applying to certain fields.

A common problem of the two-dimensional codes illustrated in Figs. 3 to 5 is that they have no forgery prevention function. They can be used by printing using an ordinary copy machine. The present invention proposes that a two-dimensional code having a forgery prevention function can be made by performing forgery prevention processing with respect to an existing two-dimensional code.

That is, new mobile phone information embedded codes are made by performing forgery prevention process with respect to all existing two-dimensional codes.

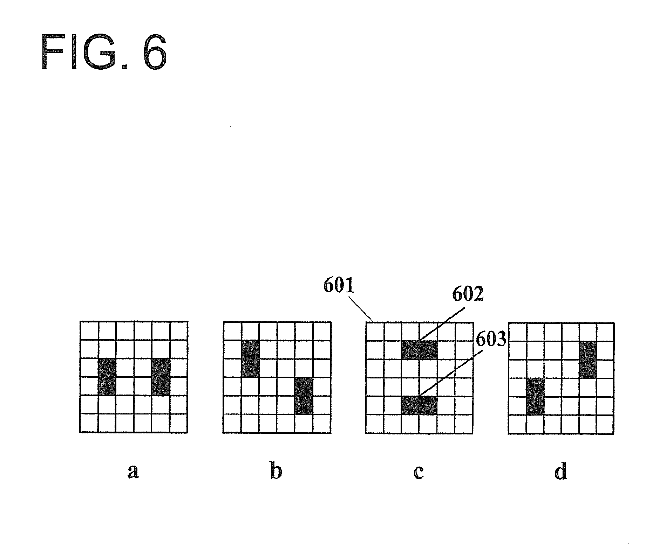

Fig. 6 illustrates a diagram of writing of multi-bit information by different directions.

As illustrated in Fig. 6, number 601 generally shows a grid (matrix) of the mobile phone information embedded code, and, numbers 602 and 603 show dots in each grid indicating information. The multiple bits information can be written by different positions and directions of the dots 602 and 603.

In Fig. 6, for example, a dot pattern of (a)represents information 0, a dot information (b) represents information 1, a dot pattern (c) represents information 2, and a dot pattern of Fig. 6 (d) represents information 3. The grids (a), (b), (c), and (d) of the mobile phone information embedded code can achieving the writing of the multi-bit information by results of obviously different directions, different propagation directions of electromagnetic waves, and different vectors of dynamics.

Fig. 7 illustrates a diagram of recording of multi-bit information by different forms.

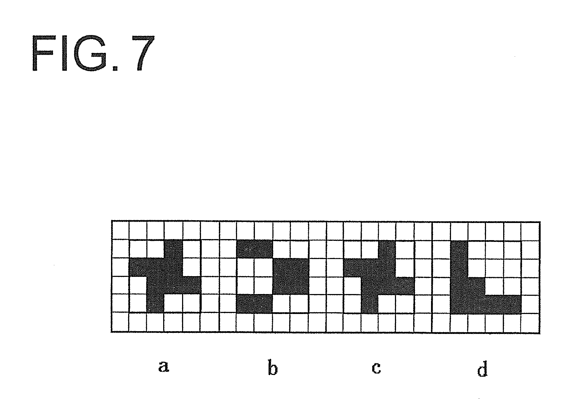

In Fig. 7, dot pattern (a) represents information 0, dot information (b) represents information 1, dot pattern (c) represents information 2, and dot pattern (d) represents information 3.

Recording the multi-bit information in different forms has a special meaning in the applications to the fields of forgery prevention. As described above, one piece of information can be written to a printed matter by changing a grid form while maintaining a gray scale of a grid of a printed image. If the printed matter is coped by a copy machine using ordinary standard separation software, the grid written with the information is returned to a specified grid form determined by the standard separation software. Hence, the embedded information is lost. Using this characteristic, an anti-counterfeit system can be established.

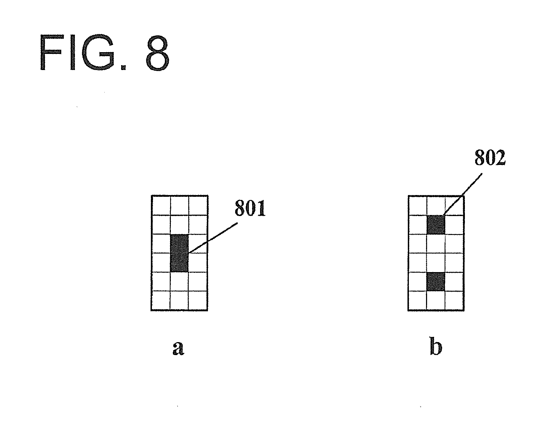

Fig. 8 illustrates a diagram of writing of information by a centralized grid and a distributed grid.

As illustrated in Fig. 8, in one grid, information can be written using a centralized grid a in which a dot indicating information is configured by a mass of one dot 801, and a distributed grid b in which a dot indicating information is configured by a plurality of dots 802. The centralized grid (a) represents an information bit value "1" and the distributed grid (b) represents an information bit value "0". On the contrary, the centralized grid (a) can represents an information bit value "0" and the distributed grid (b) can represents an information bit value "1".

As illustrated in Fig. 8, the centralized grid (a) is an amplitude modulation scheme (that is, AM screen) and the distributed grid (b) is a frequency modulation scheme (that is, FM screen). That is, information can be written by dot patterns, of which the modulation schemes are different.

When $x_0$ and $y_0$ are a width and a height of a grid, respectively, and T is a gap between grids, the amplitude modulation AM screen and the frequency modulation PM screen can be expressed by the following formula.

Amplitude modulation AM screen (grid (a)):

[Formula 1]

$$AM(m,n) = \sum_{i=-\infty}^{+\infty} \sum_{j=-\infty}^{+\infty} \left[ f(m,n) rect\left( \frac{m-iT}{x_0}, \frac{n-jT}{y_0} \right) \times circ\left( \frac{\sqrt{(m-iT)^2 + (n-jT)^2}}{\varepsilon(m,n)} \right) \right]$$

can be performed by adjusting a radium $\varepsilon(m,n)$ of a circular hole function $circ(\frac{\sqrt{(x-i)^2 + (y-j)^2}}{r})$ .

Frequency modulation FM screen (grid (b)):

[Formula 2]

$$FM(m,n) = \sum_{i=-\infty}^{+\infty} \sum_{j=-\infty}^{+\infty} \left\{ f(m,n) rect\left( \frac{m-iT}{x_0}, \frac{n-jT}{y_0} \right) \times \sum\sum \delta\left[ (m-\varepsilon(m,n)), (n-\eta(m,n)) \right] \right\}$$

$\varepsilon(m,n)$ and $\eta(m,n)$ are adjusted within the range of $(x_0, y_0)$ (that is, within the grid range).

By changing $s(m,n)$ and $\eta(m,n)$, a density and a position of impulse are changed. Therefore, a frequency modulation can be performed.

Since the centralized grid a can be a low-frequency grid and the distributed grid b can be a high-frequency grid, the centralized grid (a) and the distributed grid (b) can record information by different frequency components. Alternatively, the centralized grid (a) and the distributed grid (b) can write information as grids having different number of dots.

Furthermore, a gray scale value of the dot of the centralized grid (a) is high, and a gray scale value of the dot of the distributed grid (b) is low. Therefore, information can be written by a difference between the gray scale values of one point.

In other words, since a size of the dot of the centralized grid (a) is large and a size of the dot of the distributed grid (b) is small, information can be written by a difference of the size between the centralized grid (a) and the distributed grid (b).

In relation to the above contents, there are more expression methods, but they fall within the scope of the present invention as long as they are similar to the above-described dot pattern.

Even when the information is written by the centralized grid and the distributed grid illustrated in Fig. 8, the application to the fields of forgery prevention can be performed as in the dot pattern writing the information by the above-described different forms. As described, the grid of the printed image can write one piece of information to the printed matter through the centralization and distribution of the dots within the grid while maintaining the grays scale of the grid. If this printed matter is forged, as described above, when copied by an ordinary standard separation software, the grid is returned to a specified grid form defined by the standard separation software. Thus, the embedded information is lost. Using this characteristic, a anti-counterfeit system can be established.

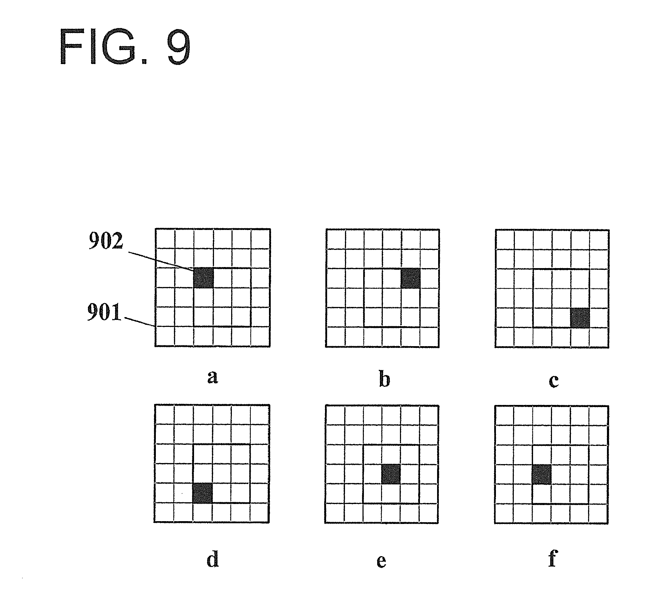

In Fig. 9, dot patterns (a) to (f) show dot patterns for representing multiple bits information using different dot positions in a grid and phase modulation. As shown in Fig. 9, for example, a dot pattern (a) can represent information "0", a dot pattern (b) can represent information "1", a dot pattern (c) can represents information "2", and a dot pattern (d) can represent information "3". Dot patterns (e) and (f) show a reference grid and a direction key grid, respectively, of an information embedded code.

Each dot pattern shown in Fig. 9 can describe information using the different dot positions and phase modulation. As shown in Fig. 9, each dot in the dot patterns (a) to (f) can be arranged to be placed in a sectioned rectangular area (grid) made of 3 × 3 small pixels. Alternatively, an arrangement of 5 × 5 small pixels or 7 × 7 small pixels may be provided for a grid. Furthermore, smaller pixels for composing each grid could be adapted if necessary.

For describing multi-bit information using different dot positions in the gird and phase modulation, one coordinate system always needs to be used according to a geometric theory. In other words, when information dots are isolated each other in a space of geometric configuration, the relation between positions of the dots cannot be determined. In a two-dimensional code of the conventional art, two reference lines including one virtual horizontal reference line constituted by horizontal reference grids and one virtual vertical reference line constituted by vertical reference grids are always provided in a dot matrix.

In the present invention, however, in order to reduce the number of the reference grids as small as possible, the virtual reference line and horizontal reference line are integrated to a single reference line that can be constituted by a small number of the reference grids. That can be realized by placing the reference grids along with a virtual line at an angle of 45 degrees in grids matrix of the code on the basis of linear transformation theory of geometry.

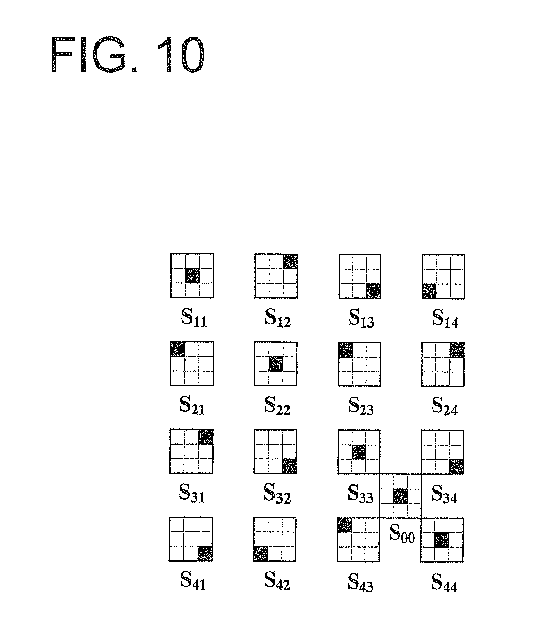

Fig. 10 is a diagram showing an information module with a single straight virtual reference line integrating the vertical and horizontal reference lines.

According to the information module of Fig. 10, one information module is formed by arranging 4 × 4 grids like as matrix representing information embedded code.

One information grid can describe 2-bit information by placing the information dot at four different corners of the grid. In the information module of Fig. 10, grids $S_{11}$, $S_{22}$, $S_{33}$ and $S_{44}$ are the reference grids, which are arranged to be placed along with a virtual line at an angle of 45 degrees and constitute the virtual reference line. Grid $S_{00}$ is a key dot grid representing the direction of an information embedded code. Grids $S_{12}$, $S_{13}$, $S_{14}$, $S_{21}$, $S_{23}$, $S_{24}$, $S_{31}$, $S_{32}$, $S_{34}$, $S_{41}$, $S_{42}$, and $S_{43}$ are the information grids. Up to 24-bit information can therefore be recorded by using these 12 information grids because each information grid can describe 2 bits information.

As compared to the information matrix of the conventional art in which two virtual reference lines are necessary to be provided horizontally and vertically, the number of reference grids can be reduced, and can be replaced to the information grids, then the amount of information grids can thus be increased by 6 bits (3 grids) in the example of Fig. 10. Furthermore, since the reference dots are provided at an angle of 45 degrees on the virtual reference line and displacement in printing in the horizontal and vertical directions of a printer are reflected in the reference grids arranged on one virtual reference line at an angle of 45 degrees in the information module shown in Fig. 10, the displacement is absorbed and corrected by the single reference line. At the angle of 45 degrees of the virtual reference line, the position of one dot in a two-dimensional space can always be defined by the relation with any two reference dots, and the accuracy of identifying the position in the information module is therefore not affected by use of a single reference line. The angle of the virtual reference line is 45 degrees when the direction of gradient of the information module is 0 degrees as described above. Conversely, the angle of the virtual reference line may be 0 degrees when the direction of gradient of the information module is 45 degrees.

The dot patterns for recording multiple bits information by arranging dots in grids of information dots at different positions proposed in Figs. 9 and Fig. 10 can achieve a maximum amount of information with a minimum number of dots. As a result, a background pattern made of such a dot pattern having information embedded therein has a minimum impact on a printed image when the printed image and the background pattern overlap with each other.

In the dot patterns shown in Figs. 9 and Fig. 10, however, printing screen characteristics need to be taken into consideration. The printing screen characteristics to be considered mainly include the following three characteristics. The first characteristic is "the gradation characteristic of grids for a printing screen," which is a characteristic of uniformizing the gradation of grids for a screen, a characteristic of using the same number of printing dots for all the grids for a printing screen, and a characteristic of minimizing the gradation of grids for a screen. The second characteristic is "the size characteristic of grids for a printing screen," which is a characteristic of minimizing the number of printing dots of grids for a screen, and a characteristic of minimizing the size of grids for a screen. The third characteristic is "the interval characteristic of grids for a screen," which is a characteristic of arranging grids for a screen at regular intervals, and a characteristic of making the intervals between grids for a screen larger than the size of the grids for a screen.

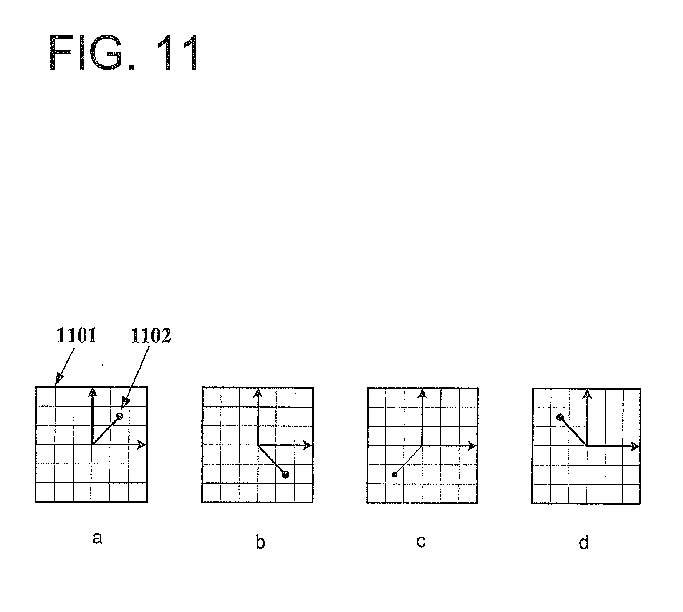

Fig. 11 illustrates a diagram of writing of information by a phase modulation (PM) of a physical form.

As illustrated in Fig. 11, a grid 1101 of one mobile phone information embedded code of Fig. 9 is an example of four types of different phase modulations, that is, (a), (b), (c), and (d) configured by signal transmission of a phase modulation (PM) of different physical forms of an information dot 1102.

Here, when a function of an image of a dot pattern configured by placing matrixes at the same intervals in a direction horizontal and vertical direction in a two-dimensional space is {ζm,n}, the phase modulation scheme can satisfy the following formula.

[Formula 3]

$$\psi\, m,n = \sum_{i=-\infty}^{\infty} \sum_{j=-\infty}^{\infty} \zeta_{m-i,n-j} \times \eta\left\{[i+\varepsilon(m,n)] \times T, \left[j+\delta(m,n)\right] \times T\right\}$$

With the above formula, assuming that the image function $\{\zeta m, n\}$ is a propagation signal in a two-dimensional space, phase modulation with respect to the image function $\{\zeta m,n\}$ can be performed by the changes of $\varepsilon(m,n)$ and $\delta(m,n)$.

The characteristic of the dot pattern writing the multi-bit information by the phase modulation theory is that the number of reference dots can be reduced because a phase value of each dot can be calculated if there is an initial value of a signal when a code value is identified, based on a traditional signal analysis theory.

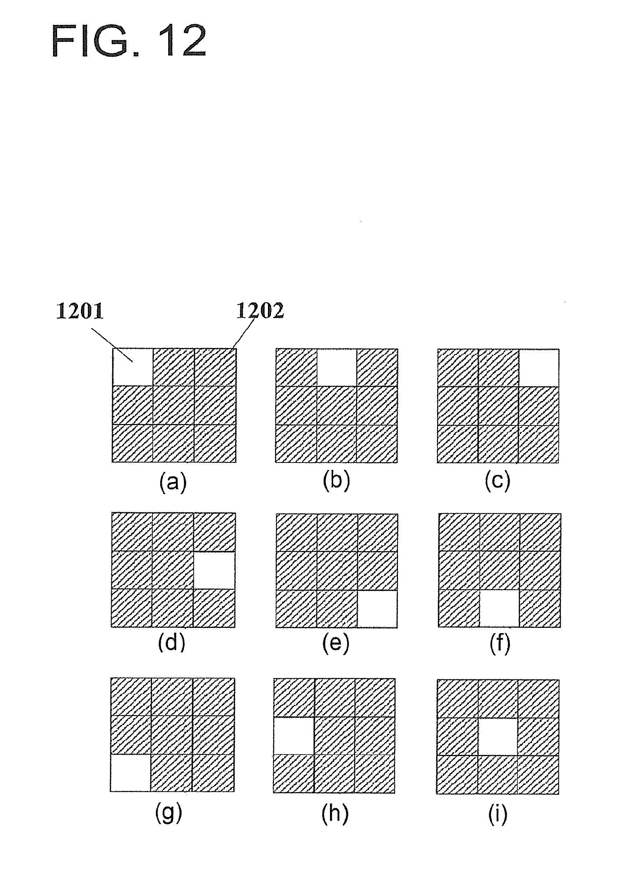

Grids (a) to (i) in Fig. 12 illustrate diagrams of a method of realizing dot patterns to maximize a printing area.

The mobile phone information embedded code configured by the dot patterns illustrated in Figs. 9 and 10 minimizes the printing area. That is, it is a printing area that minimizes the gray scale value of the dot pattern. If white and black dots of the dot patterns of Figs. 9 and 10 are inverted, as illustrated in Fig. 12, it is possible to configure the information embedded code to maximize the printing area. In each grid shown in Fig. 12, the dot designated by number 1201 is a non-print dot and the dots designated by number 1202 are print dots. A set of print dots configure a printing area.

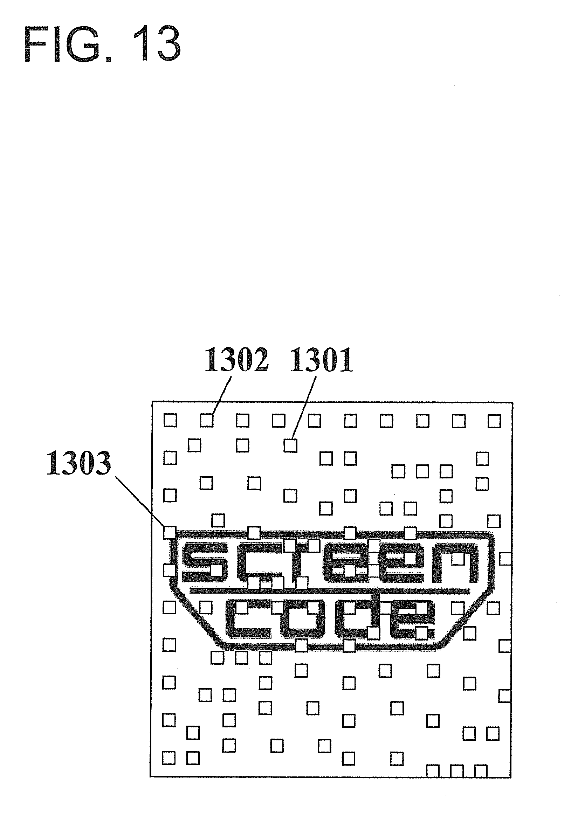

Fig. 13 illustrates a diagram of an application example of a mobile phone information embedded code to maximize a printing area.

As illustrated in Fig. 13, the mobile phone information embedded code can be configured by a combination of codes to maximize the printing area. Here, various labels and designs can be printed on the above-described area. Due to such a structure, an image embedded by the information embedded code can be read using the mobile phone.

In Fig. 13, number 1301 is the grid of the information dot (information grid), and numbers 1302 and 1303 are the grid of the reference dot (reference grid). In Fig. 13, a white portion is the grid of the mobile phone information embedded code, and a black portion indicates a design such as a trademark, an image, or a graphic.

In order to display a prettier trademark, image or graphic, a gray scale value of the white dot portion is set to be smaller than a minimum gray scale value of a pixel corresponding to an image of the trademark, image or graphic.

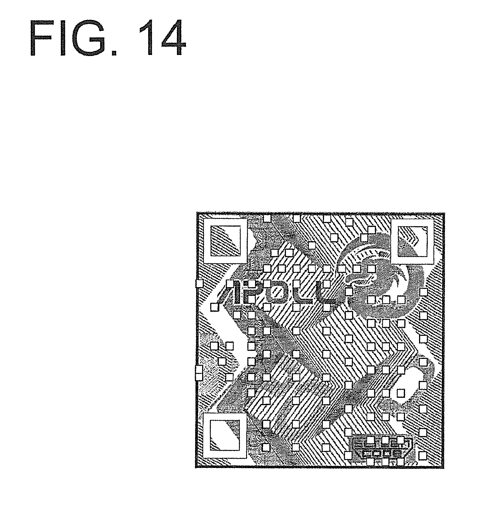

Fig. 14 illustrates an example of an information embedded code of an ordinary two-dimensional code. In fact, the structures of the codes of Figs. 6 to 11 and the structure of various ordinary two-dimensional codes are originally the result of one combination of two-dimensional matrixes, in which symbols capable of writing 1-bit information are arranged, with respect to minimum cells.

With respect to an amount of information capable of being recorded on 1 unit area, the ordinary two-dimensional code may be slightly higher than the mobile phone information embedded code. However, with respect to an amount of information capable of writing information of one symbol, the mobile phone information embedded code is several times higher than the ordinary two-dimensional code. In particular, since the mobile phone information embedded code is the information embedded code, there is an advantage that does not occupy a space. An area capable of recording information is several times wider than the ordinary barcode. Therefore, as a whole, the mobile phone information embedded code can write a large amount of information.

As illustrated in Fig. 14, the information embedded code can be configured by partially combining the ordinary two-dimensional codes.

At the time of generating the code, the ordinary two-dimensional code illustrated in Figs. 3 to 5 and 14 described above can also configure a forgery prevention mechanism by printing using a special ink in which an RGB color space of an image read by at least one type of a scanner cannot be directly converted into a CMYK color space, including a thermal ink, a sun-sensitive color-changing ink, an OVI (optically variable) ink, a luminous ink, a water-sensitive color-changing ink, an infrared fluorescence ink, an ultraviolet fluorescence ink, a visible-light fluorescence ink, an ink of an absorption wavelength different from a background image, an ink of a reflection wavelength different from a background image, or an ink of a reflection angle different from a background image.

Similarly, the mobile phone information embedded code illustrated in Figs. 6 to 10 and 12 to 13 described above can also prevent forgery by printing using a special ink in which an RGB color space of an image read by at least one type of a scanner cannot be directly converted into a CMYK color space, including a thermal ink, a sun-sensitive color-changing ink, an OVI (optically variable) ink, a luminous ink, a water-sensitive color-changing ink, an infrared fluorescence ink, an ultraviolet fluorescence ink, a visible-light fluorescence ink, an ink of an absorption wavelength different from a background image, an ink of a reflection wavelength different from a background image, or an ink of a reflection angle different from a background image.

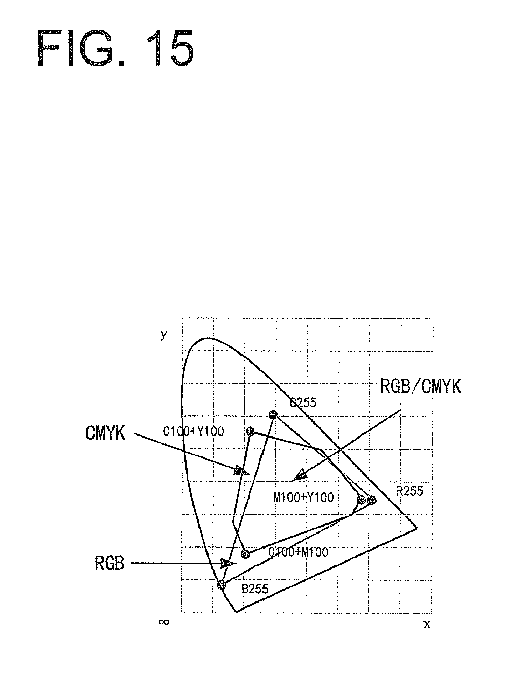

Fig. 15 illustrates a diagram of a high-precision scan-prohibited color. As is well known, at the present time, the precision of the printing machine is much lower than the scanner. A person who forges a product mark scans an authentic product mark of a product by a high-precision scanner and generates a fake product mark using a printing machine. As illustrated in Fig. 15, all colors of an electronic image read by a scanner inevitably belong to an RGB color space, and colors of an actually printed image inevitably belong to a CMYK color space. In some colors among the colors belonging to the CMYK color space, some colors cannot be converted into the RGB color space. Therefore, if the above-described code structures are effectively combined using such colors, it is possible to realize the effect of the copy-prohibited forgery prevention.

Among the colors of the CMYK color space, there are various colors that cannot be converted into the colors of the RGB color space. Besides these, the colors include colors printed using no-carbon black ink, a carbon-contained tinted ink, a thermal ink, a sun-sensitive color-changing ink, an OVI (optically variable) ink, a luminous ink, a water-sensitive color-changing ink, an infrared fluorescence ink, an ultraviolet fluorescence ink, a visible-light fluorescence ink, an ink of an absorption wavelength different from a background image, or an ink of a reflection wavelength different from a background image, an ink of a reflection angle different from a background image.

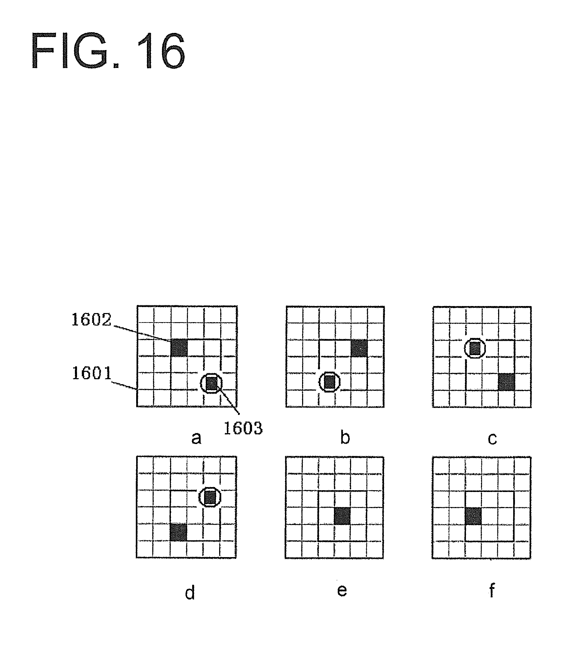

Fig. 16 illustrates a diagram of a digital forgery prevention principle. Among bit patterns (a) to (d) capable of writing multiple bits information as illustrated in Fig. 9, one forgery prevention dot 1603 is added to the grid 1601 as illustrated in Fig. 16. Here, the information dot 1602 capable of writing information is a dot printed by one type of ink to be read by a reader, and the forgery prevention dot 1603 is a dot printed as a similar form by an ink having a similar color to the information dot 1602 and a different property from the information dot 1602. For example, in a case where the reader reads by infrared light, the information dot 1602 is a dot that prints by a carbon-containing ink. The forgery prevention dot 1603 is a dot that prints by no-carbon ink of a color similar to the information dot 1602. For another example, in a case where the reader reads by ultraviolet light, the information dot 1602 is a dot that prints by an ultraviolet fluorescence ink. The forgery prevention dot 1603 is a dot that prints by an ordinary ink of a color similar to the information dot 1602. Due to such a structure, when the forgery is performed using a high-precision scanner, the information dot 1602 and the forgery prevention dot 1603 become the similar color, thereby providing the forgery prevention function.

Furthermore, since the position relationship between the information dot 1602 and the forgery prevention dot 1603 is determined by encryption, a clipping or forgery of an image by an intervention of a person cannot be performed, thereby perfectly preventing forgery.

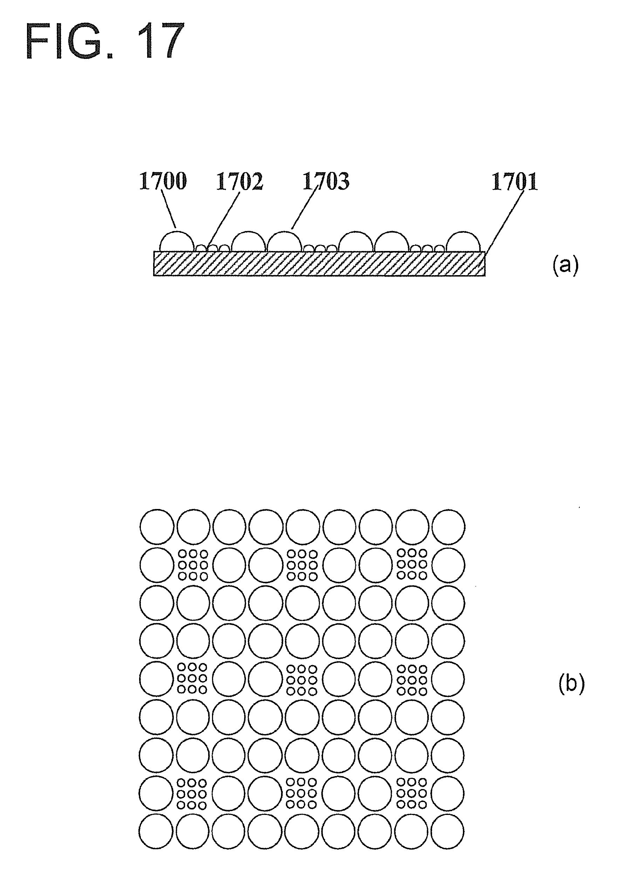

Fig. 17 illustrates an example of performing information embedding by a printing density of different convex dots. As illustrated in Fig. 17, a rounded convex dot or a micro lens can be printed using a transparent ink or the like through printing means such as a screen printing or an intaglio printing. Here, the information embedding can be performed by strictly controlling an arrangement of a density of different rounded convex dots or micro lenses and a size of different rounded convex dots or micro lenses, a situation of optical diffusion of different rounded convex dots or micro lenses, a situation of optical reflection of different rounded convex dots or micro lenses, and a situation of optical moire.

Drawing (a) in Fig. 17 shows a portion of a cross-sectional view of the mobile phone information embedded code, and Drawing (b) shows a portion of an overhead view of the mobile phone information embedded code. Number 1700 of (a) is one mobile phone information embedded code, Number 1701 is a printing medium, number 1702 is a dot matrix, and number 1703 is a background of a code.

As illustrated in Fig. 17, the dot matrix 1702 of the anti-counterfeit code is configured by several small convex dots, and the background 1703 of the mobile phone information embedded code is configured by several large convex dots.

Furthermore, the dot matrix 1702 can be configured by sand dots that absorb light, and the background 1703 of the mobile phone information embedded code can be configured by dots that reflect light. That is, the mobile phone information embedded code can be configured by two types of different optical effects of the dot matrix 1702 and the background 1703 of the code.

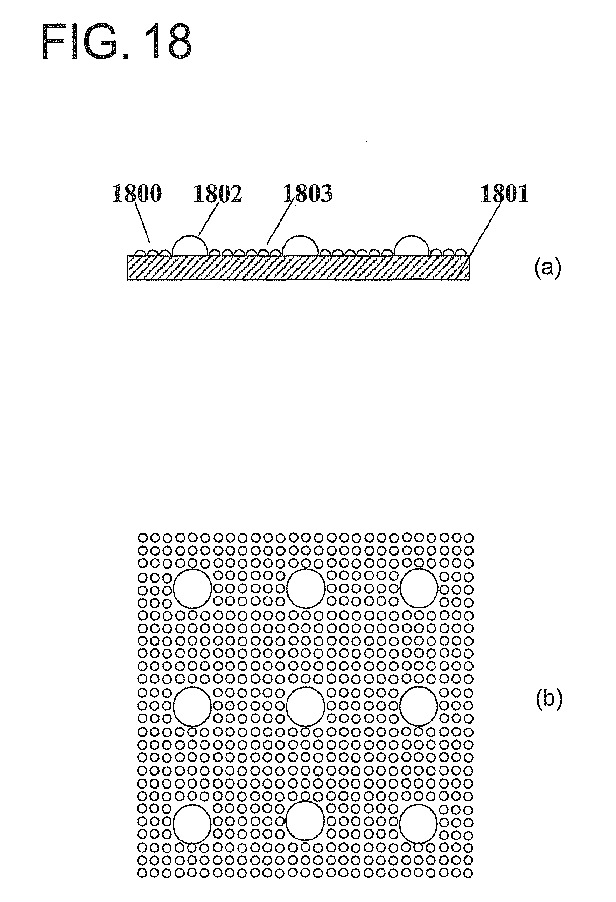

Fig. 18 illustrates an example of performing information embedding by a printing density of another different convex dot. (a) shows a portion of a cross-sectional view of the mobile phone information embedded code, and (b) shows a portion of an overhead view of the mobile phone information embedded code. Number 1800 of (a) is one mobile phone information embedded code, number 1801 is a printing medium, number 1802 is a dot matrix of the mobile phone information embedded code, and number 1803 is a background of a code. As illustrated in Fig. 18, the dot matrix 1802 is a large convex dot, and the background 1803 of the mobile phone information embedded code is a small convex dot.

Here, the dot matrix 1802 can configure the mobile phone information embedded code by installing a rounded convex dot or a micro lens at a specified position and controlling an optical diffusion direction, an optical reflection direction, and an optical moire.

The characteristic of the mobile phone information embedded code shown in Figs. 17 and 18 is that the dot matrix is configured by the 3D micro lens and thus the forgery using the ordinary scanner is impossible, thereby achieving the forgery prevention effect.

Due to the above-described characteristic, the symbol size, that is, the dot size of the mobile phone information embedded code is large and the forgery prevention is possible. Therefore, there is a characteristic that the mobile phone information embedded code can be directly read under natural light by using the mobile phone. A general consumer can determine an authenticity of a product by using the mobile phone.

Here, the code formats related to Figs. 17 and 18 are not limited to the new types of codes of Figs. 6 to 10, Figs. 12 to 15, and Figs. 22 to 28, and can also be applied to the ordinary two-dimensional codes of Figs. 3 to 5 and all codes configured by two-dimensional images.

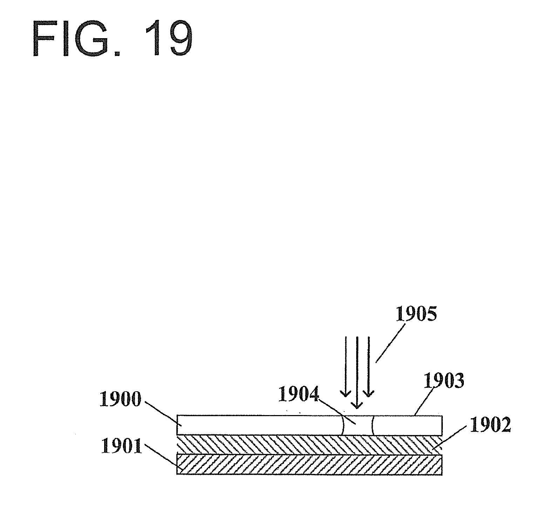

Fig. 19 illustrates an example of an information embedded code generation method using a laser marker. As illustrated in Fig. 19, number 1900 is a mobile phone information embedded code, number 1901 is a code embedding medium, number 1902 is an identification color layer, number 1903 is a background layer, number 1904 is a position of a dot pattern, and number 1905 is a laser.

Here, at the time of generating the mobile phone information embedded code 1900, the identification color layer 1902 is configured in advance on the code embedding medium 1901 by printing using a special ink in which an RGB color space of an image read by at least one type of a scanner cannot be directly converted into a CMYK color space, including a carbon-containing ink, a thermal ink, a sun-sensitive color-changing ink, an OVI (optically variable) ink, a luminous ink, a water-sensitive color-changing ink, an infrared fluorescence ink, an ultraviolet fluorescence ink, a visible-light fluorescence ink, an ink of an absorption wavelength different from the background layer 1903, an ink of a reflection wavelength different from the background layer 1903, and an ink of a reflection angle different from the background layer 1903. Again, the background layer is configured by printing one layer of a white ink or an ink configuring the above-described background layer on the identification color layer 1902.

The ink configuring the background layer is an ink corresponding to the ink of an absorption wavelength different from the background layer 1903, the ink of a reflection wavelength different from the background layer 1903, and the ink of a reflection angle different from the background layer 1903.

The laser 1905 corresponds to the position 1904 of the dot pattern. The background layer 1903 is locally evaporated and thus the identification color layer 1902 thereunder appears, thereby forming one dot. Continuously to this, the generation of the mobile phone information embedded code can be completed.

Here, the code formats related to Fig. 19 are not limited to the new types of codes of Figs. 6 to 10, Figs. 12 to 14, and Figs. 23 and 24, and can also be applied to all codes configured by two-dimensional images, such as the ordinary two-dimensional codes of Figs. 3 to 5.

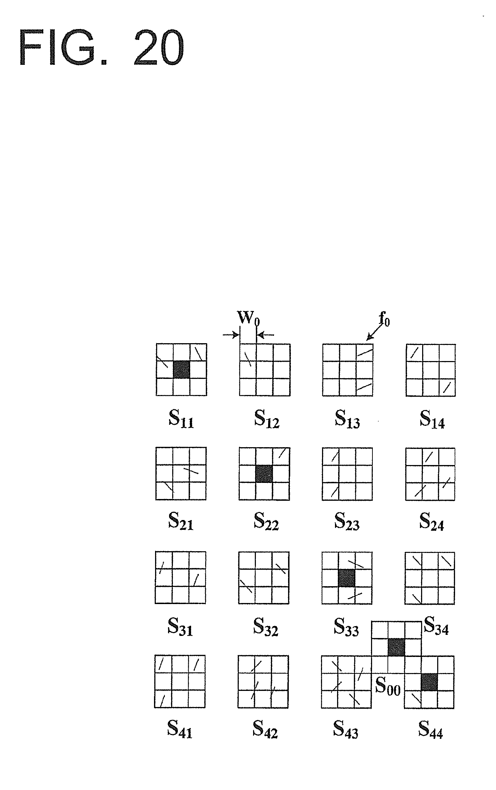

Fig. 20 illustrates an example of a formation of a natural random variable information code.

When compared with the formation of the variable information code artificially printed by an inkjet printing machine as illustrated in Fig. 10, the present invention can configure a randomly placed dot pattern capable of writing one piece of information by mixing an ordinary ink with an optically readable material and coating the mixture on a printing medium when processing a paper, the optically readable material including a plurality of small fibers, resin particles, and small foams, as illustrated in Fig. 20. Based on a specified recognition rule, a code value of the randomly placed dot pattern can be identified.

In Fig. 20, grids $S_{11}$, $S_{22}$, $S_{33}$, and $S_{44}$ are reference grids, and grids $S_{12}$, $S_{13}$, $S_{14}$, $S_{21}$, $S_{23}$, $S_{24}$, $S_{31}$, $S_{32}$, $S_{34}$, $S_{41}$, $S_{42}$, and $S_{43}$ are information grids.

Here, $w_0$ is a microcell, $f_0$ is an optically readable material, and the specified recognition rule is that the size of the optically readable material $f_0$ is smaller than the size of the microcell $w_0$, that is, $w_0 > f_0$. Also, the optically readable material $f_0$ is necessarily placed in the microcell $w_0$. The optically readable material is processed as not existing in the microcell. Alternatively, a plurality of optically readable materials can be placed in one grid, and a code value is calculated based on the placement of the plurality of optically readable materials.

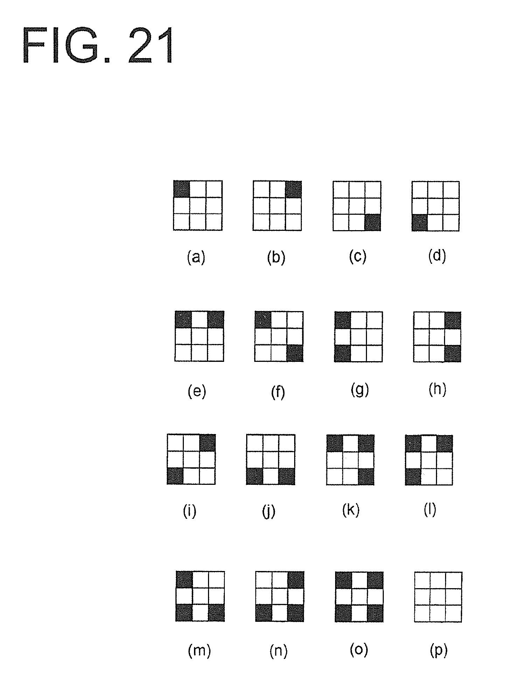

Figs. 21 illustrate examples of code value calculation of placement of a plurality of optically readable materials.

As illustrated in Fig. 21, grids (a) to (p) are grids capable of writing information, and 2102 is an optically readable material. A code value of an optically readable material placed in a grid (a) represents "1", a code value of an optically readable material placed in a grid (b) represents "2", a code value of an optically readable material placed in a grid (c) represents "3", a code value of an optically readable material placed in a grid (d) represents "4", a code value of an optically readable material placed in a grid (e) represents "5", a code value of an optically readable material placed in a grid (f) represents "6", a code value of an optically readable material placed in a grid (g) represents "7", a code value of an optically readable material placed in a grid (h) represents "8", a code value of an optically readable material placed in a grid (i) represents "9", a code value of an optically readable material placed in a grid (j) represents "10", a code value of an optically readable material placed in a grid (k) represents "11", a code value of an optically readable material placed in a grid (l) represents "12", a code value of an optically readable material placed in a grid (m) represents "13", a code value of an optically readable material placed in a grid (n) represents "14", a code value of an optically readable material placed in a grid (o) represents "15", and a code value of an optically readable material placed in a grid (p) represents "0".

The optically readable material is an optically readable material made to have a necessary optical characteristic by processing a material of the color medium, such as a filer, using one type among a thermal pigment, a sun-sensitive color-changing pigment, an OVI (optically variable) pigment, a luminous pigment, a water-sensitive color-changing pigment, an infrared fluorescence pigment, an ultraviolet fluorescence pigment, a visible-light fluorescence pigment, an infrared absorption pigment, an infrared transmission pigment, a pigment of an absorption wavelength different from a background image, a pigment of a reflection wavelength different from a background image, a pigment of a transmission wavelength different from a background image, and a pigment of a reflection angle different from a background image.

The generation of the random variable information code illustrated in Fig. 21 can be form a random dot pattern by mixing the above-described optically readable material with a paper pulp or an ink and coating the mixture on a paper or printing the mixture on a printing medium. From that, a reference dot is generated on the random dot pattern by using one method among coating, offset printing, letterpress printing, intaglio printing, or laser marker. In this way, the variable information is configured by a geometric form including different positions, different directions, different shapes, and different distances of the optically readable material, or a physical form including different phase modulation (PM) results, different modulation (AM/FM) methods, different propagation directions, and different vectors of dynamics.

In a similar manner, with reference to the forgery prevention dot pattern structure of Fig. 16, the optically readable material including small fibers, resin particles, and small foams as the information dot is made to have a plurality of different optical characteristics, thereby further improving the forgery prevention effect. There are many methods of increasing the level of the forgery prevention, but all the methods fall within the scope of the present invention as long as they are similar to the above-described structure.

Various variable information codes can be transmitted to the printing equipment in the image format including JPG, TIFF, BMP, or PDF, and the variable information can be printed. However, in the case of printing a large amount of variable information codes, for example, million or more variable information codes, a time is taken to convert image data, and furthermore, net transmission of the image data takes a long time and a large-capacity memory space. In order to solve this problem, the pattern of the mobile phone information embedded code is generated by multiple fonts, and the mobile phone information embedded code is configured by a combination of the multiple fronts. In this way, it is possible to realize the printing of a large amount of variable information codes.

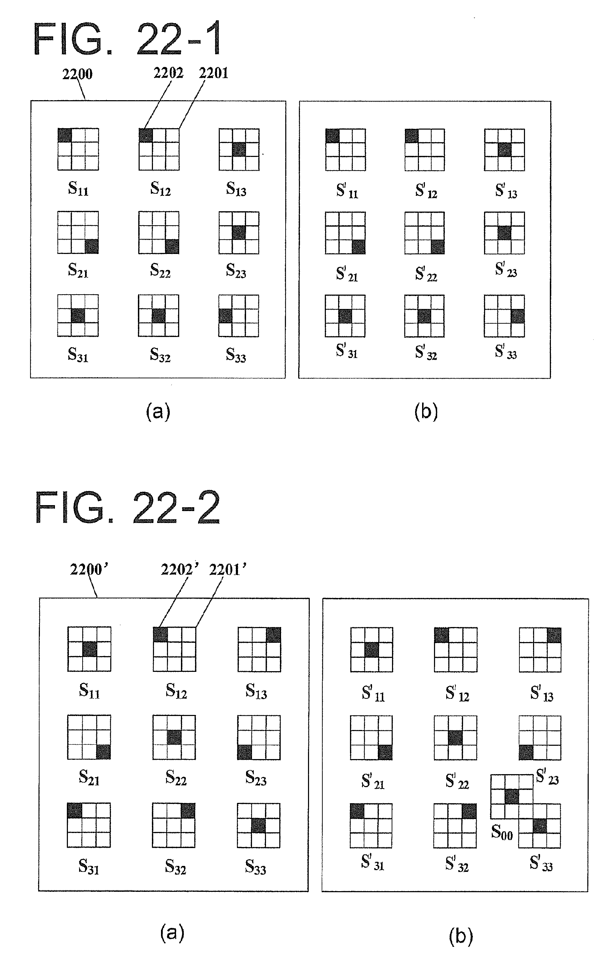

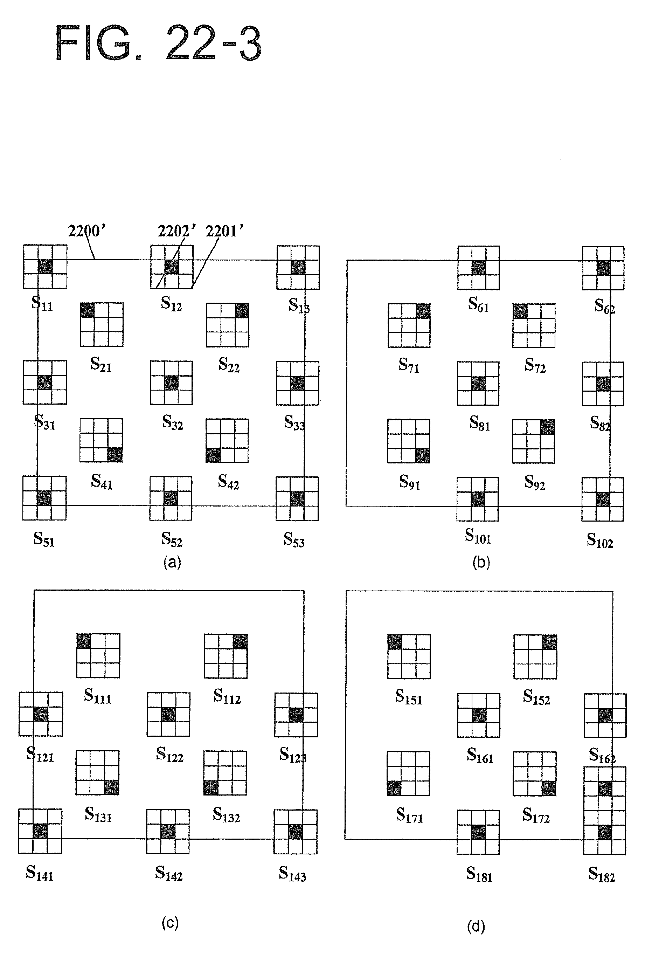

Figs. 22-1 to 22-3 illustrate three examples of a method for constructing a mobile phone information embedded code by multiple fonts.

Fig. 22-1 illustrates a method for constructing a dot pattern with horizontal and vertical reference dots by a font.

As illustrated in Fig. 22-1, number 2200 is an example of the information embedded code having one horizontal and vertical reference grids, designated by number 2201 is one example of a grid in the information embedded code 2200, and numeral 2202 designates a grid dot in the grid. Grids $s_{11}$, $s_{12}$, $s_{21}$, $s_{22}$, $s'_{11}$, $s'_{12}$, $s'_{21}$, and $s'_{22}$ are information grids, and information dots of all information grids are placed at one of the four positions (corners) of the grid. In this manner, four data, that is, 2-bit information can be written. Grids $s_{31}$, $s_{32}$, $s'_{31}$, and $s'_{32}$ are vertical reference grids, and grids $s_{13}$, $s_{23}$, $s'_{13}$, and $s'_{23}$ are horizontal reference grids.

Dot pattern (a) of Fig. 22-1 is an example of an ordinary font, and its characteristic is that it is a dot indicating a direction of the mobile phone information embedded code by shifting the grid $s_{33}$ to the left. The remaining vertical reference dots and horizontal reference dots are placed in the center.

Dot pattern (b) of Fig. 22-1 is an example of start and end fonts, and its characteristic is that it is a dot indicating a direction of the mobile phone information embedded code by shifting the grid s'33 to the right. Similarly, the remaining vertical reference dots and horizontal reference dots are placed in the center.

Fig. 22-2 illustrates a method for constructing a font of a mobile phone information embedded code with only one 45-degree reference line defined by reference grids. As illustrated in Fig. 22-2, designated by number 2200' is one example of a font matrix of the information embedded code having only one 45-degree reference line, number 2201' designates a grid of the information embedded code(information grid), and number 2202' designates a grid dot. Grids $S_{12}$, $s_{13}$, $s_{21}$, $S_{23}$, $s_{31}$, $s_{32}$, $s'_{12}$, $s'_{13}$, $s'_{21}$, $s'_{23}$, $s'_{31}$, and $s'_{32}$ are examples of the information grids, and all of the grid dots in the information grids are placed at any one of the four corner positions of the grid. In this manner, four data, i.e. 2-bit information could be written. Grids $s_{11}$, $s_{22}$, $S_{33}$, $s'_{11}$, $s'_{22}$, and $s'_{33}$ are horizontally-vertically integrated reference grids.

Dot pattern (a) in Fig. 22-2 shows an ordinary font matrix, and its characteristic is that all of the grid dots in reference grids $s_{11}$, $s_{22}$, and $s_{33}$ are all placed in the center of the grids. Dot pattern (b) in Fig. 22-2 shows an end font, and its characteristic is that a distance between key girds $s_{00}$ and $s'_{33}$ is very close, and the position of the reference grids could be found quickly. The key grids $s_{00}$ and $s'_{33}$ can represent the direction information of the mobile phone information embedded code and also represent the start and end information of the entire mobile phone information embedded code.

Fig. 22-3 illustrates a font of a code called GRID.

The GRID code information writing mechanism defines information by setting the center surrounded by grid dots of four points as a virtual reference point and placing an information dot at an expressed end point by a direction vector, with the virtual reference point as a start point. The present invention proposes the structure of such a dot pattern in a font format. The characteristic is that since such a code is configured in a vector data format, a speed of conversion from data to a dot matrix can be increased and a speed of printing variable information can also be increased, thereby reducing a usage of a memory.

As illustrated in Fig. 22-3, a font is defined by four lattice grids $s_{11}$, $s_{12}$, $s_{31}$, and $s_{32}$ in each of which the a dot is located at the center of the grids, and the information grid $s_{21}$ which can record multi bits information by utilizing different distances, different directions, and different positions from the virtual reference point surrounded by the four lattice grids. Therefore, lattice grids $s_{12}$, $s_{13}$, $s_{32}$, and $s_{33}$ identify an information grid $s_{22}$, lattice grids $s_{31}$, $s_{32}$, $s_{51}$, and $s_{52}$ identify an information grid $s_{41}$, and lattice grids $s_{32}$, $s_{33}$, $s_{52}$, and $s_{53}$ identify an information grid $s_{42}$. As described above, 2-bit information can be recorded by placing the information grids at four corners.

Since four information grids are present in the font illustrated in dot pattern (a) of Fig. 22-3, 8-bit information can be recorded. This font is a main font.

As illustrated in dot pattern (b) of Fig. 22-3, in the font, lattice grids $s_{61}$ and $s_{81}$ are combined with the lattice grids of the left font to configure four lattice grids. For example, with respect to the four lattice grids configured by combining the lattice grids $s_{61}$ and $s_{81}$ of the right font with the lattice grids $s_{13}$ and $s_{33}$ of the left font, the information grid $s_{71}$ can record multi-bit information by different distances, different directions, and different positions with respect to the virtual reference point surrounded by the four lattice grids.

Therefore, the lattice grids $s_{61}$, $s_{62}$, $s_{81}$, and $S_{82}$ correspond to an information grid $s_{72}$, the lattice grids $s_{81}$ and $s_{101}$, and the lattice grids $s_{33}$ and $s_{53}$ of the left font correspond to an information grid $s_{91}$, and the lattice grids $s_{81}$, $s_{82}$, $s_{101}$, and $s_{102}$ correspond to an information grid $s_{92}$. As described above, 2-bit information can be recorded by placing the information grids at four corners. Similarly, since four information grids are present in the font illustrated in dot pattern (b) of Fig. 22-3, 8-bit information can be recorded. The font illustrated in dot pattern (b) of Fig. 22-3 is referred to as a font that expands in an upper right direction. That is, in order to increase a capacity of writing the information of the code, it is possible to expand in an upper right direction without limitation.

As illustrated in dot pattern (c) of Fig. 22-3, in the font, lattice grids $s_{121}$ and $s_{122}$ and lattice grids $s_{51}$ and $s_{52}$ of the upper font correspond to an information grid $s_{111}$, lattice grids $s_{122}$ and $s_{123}$ and lattice grids $s_{52}$ and $s_{53}$ of the upper font correspond to an information grid $s_{112}$, lattice grids $s_{121}$, $s_{122}$, $s_{141}$, and $s_{142}$ correspond to an information grid $s_{131}$, and lattice grids $s_{122}$, $s_{123}$, $s_{142}$, and $s_{143}$ correspond to an information grid $s_{132}$.

The font illustrated in (c) of Fig. 22-3 is referred to as a font that expands in a lower left direction. That is, in order to increase a capacity of writing the information of the code, it is possible to expand in a lower left direction without limitation.

As illustrated in dot pattern (d) of Fig. 22-3, in the font, four lattice grids configured by combining a lattice grid $s_{161}$, a lattice grid $s_{123}$ of a lower left font (c), a lattice grid $s_{53}$ of an upper left font (a), and a lattice grid $s_{101}$, of an upper right font (b) corresponds to an information grid $s_{151}$. Lattice grids $s_{161}$ and $s_{162}$ and lattice grids $s_{101}$ and $s_{102}$ of an upper right font (b) correspond to an information grid $s_{152}$. Lattice grids $s_{161}$ and $s_{181}$ and lattice grid $s_{123}$ and $s_{143}$ of a lower left font (c) correspond to an information grid $s_{171}$. Lattice grids $s_{161}$, $s_{162}$, $s_{181}$, and $s_{182}$ correspond to an information grid $s_{172}$.

The font illustrated in dot pattern (d) is referred to as a font that expands in a lower right direction. That is, in order to increase a capacity of writing the information of the code, it is possible to expand in a lower right direction without limitation.

The example of converting the dot pattern into image data vectorized by the font format has been described. With reference to the above methods, more various font formats can be configured, but all methods of converting dot patterns into image data vectorized by the font formats fall within the scope of the present invention.

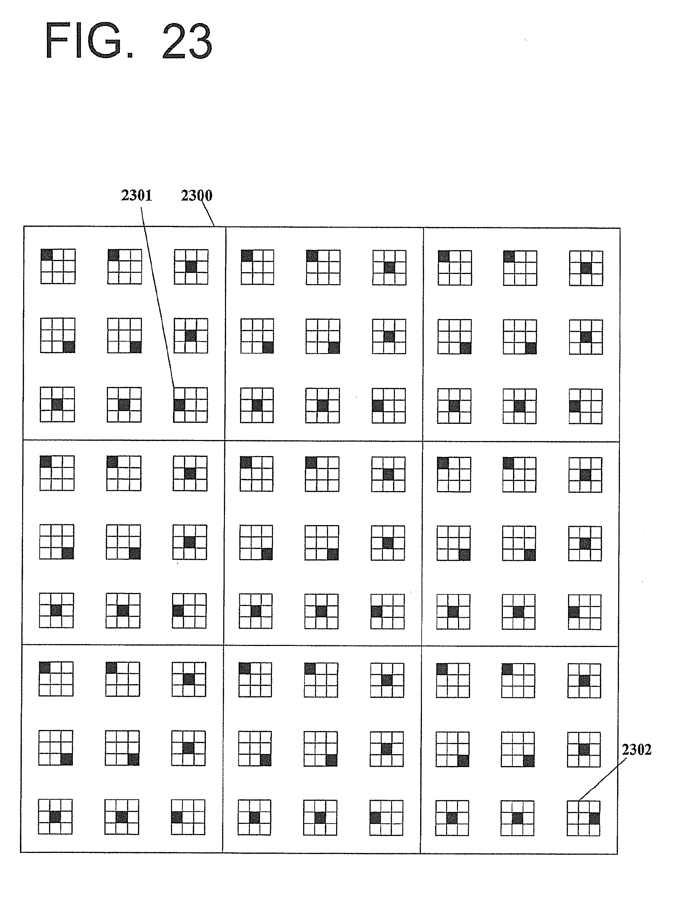

Fig. 23 illustrates an example of a variable-length mobile phone information embedded code configured by 3 × 3 font matrixes illustrated in Fig. 22-1. As illustrated in Fig. 23, number 2300 represents a variable-length mobile phone information embedded code of a 9 × 9 dot pattern configured using 3 × 3 fonts, number 2301 represents a key dot of a start font of the variable-length mobile phone information embedded code, and number 2302 represents a key dot of an end font of the variable-length mobile phone information embedded code. Therefore, the variable-length mobile phone information embedded code of n × n dots can be configured.

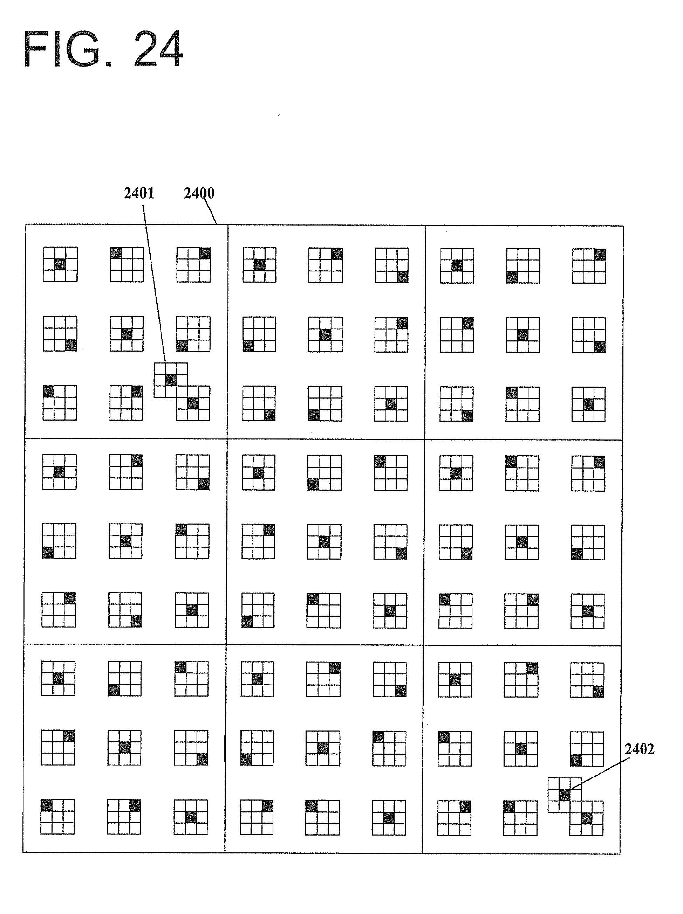

Fig. 24 illustrates an example of a set of variable-length mobile phone information embedded codes configured by 3 × 3 font matrixes illustrated in Fig. 22-2. As illustrated in Fig. 24, 2400 represents a variable-length mobile phone information embedded code of a 9 × 9 dot pattern configured by 3 × 3 font matrixes, number 2401 represents a key dot of a start font of the variable-length mobile phone information embedded code, and number 2402 represents a key dot of an end font of the variable-length mobile phone information embedded code. Therefore, the variable-length mobile phone information embedded code of n × n dots can be configured.

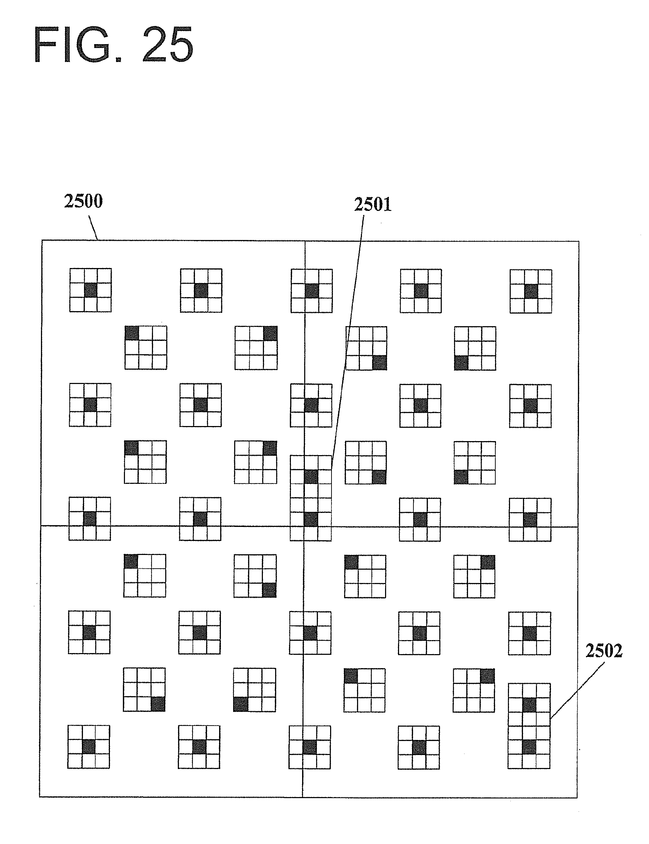

Fig. 25 illustrates an example of a variable-length mobile phone information embedded code configured by 2 × 2 fonts illustrated in Fig. 22-3. As illustrated in Fig. 25, 2500 represents a variable-length mobile phone information embedded code configured by 2 × 2 fonts, 2501 represents a key dot of a start font of the variable-length mobile phone information embedded code, and 2502 represents a key dot of an end font of the variable-length mobile phone information embedded code. Therefore, similarly, the variable-length mobile phone information embedded code of n × n dots can be configured.

All methods capable of specifying the dot direction or the dot structure at high speed by placing the above-described key dot or representing multiple dots belong to the present invention.

All methods of performing vectorization using character fonts with respect to dot patterns capable of writing multi-bit information by different positions, based on the reference dot, belong to the present invention.

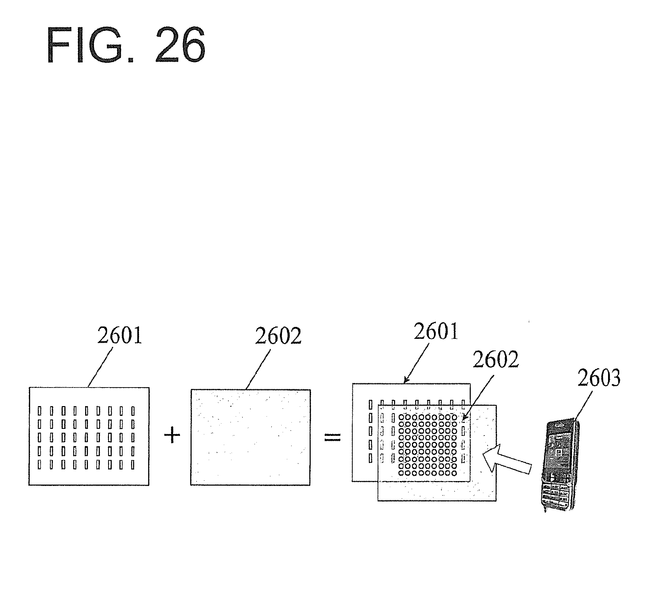

Fig. 26 illustrates an example of a method for constructing a code with another forgery prevention function.

As illustrated in Fig. 26, 2601 of Fig. 26 is a log that configures an image of a mobile phone information embedded code using one polarization effect, and 2602 of Fig. 26 is a polarization filter related to the log 2601 with the polarization effect. When the polarization filter 2602 is placed on the log 2601 with the polarization effect, the original image of the mobile phone information embedded code appears. A mobile phone information embedded code value is identified using a mobile phone 2603. Then, the mobile phone 2603 can connect to a net and download related product information.

For another example, as illustrated in Fig. 26, 2601 is a product log or a product packing image, and 2602 is a micro lens matrix formed by strictly controlling a diffusion direction of light, a reflection direction of light, and an interference direction of light based on a form of a dot pattern. The micro lens matrix 2602 is generated on the product log or the product packing image 2601, and when aligned in a specified direction, the mobile phone information embedded code can be read using the mobile phone 2603. Since the dot pattern cannot be read in a front side by a scanner, a forgery prevention effect is achieved.

Here, it is assumed that the lens matrix 2602 is generated by a screen printer.

Furthermore, 2601 is a mobile phone information embedded code interference pattern, and 2602 is an optical interference plate related to a phase of the interference pattern 2601. When the optical interference plate 2602 is placed on the interference pattern 2601, the original dot pattern image of the mobile phone information embedded code can appear. The mobile phone 2603 can read the dot pattern image, identify the code value, and download related product information.

Here, the code format related to Fig. 26 is not limited to the mobile phone information embedded codes of Figs. 6 to 10, Figs. 12 to 14, and Figs. 23 to 25, and can also be applied to the ordinary two-dimensional codes of Figs. 3 to 5. That is, all codes configured by two-dimensional images can be applied.

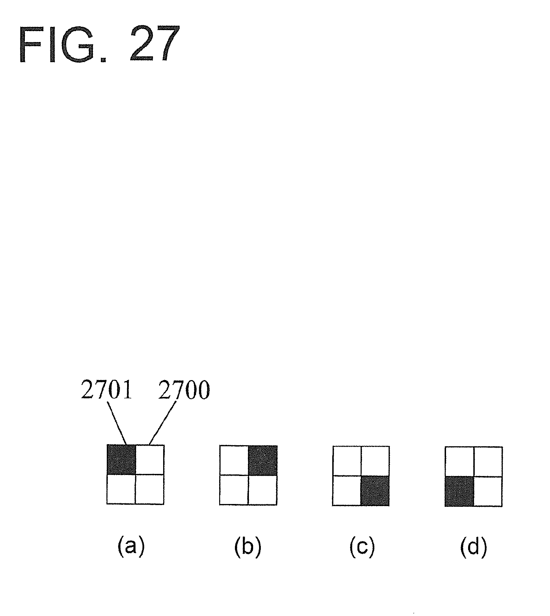

Fig. 27 illustrates an example of writing of information of a large-capacity dot pattern.

As illustrated in Fig. 27, number 2700 is a grid capable of recording multi-bit information, and one information dot corresponds to the grid configured by $2 \times 2$ micro lenses. Here, a state in which the information dot is placed at a grid (a) is information "0", a state in which the information dot is placed at a grid (b) is information "1", a state in which the information dot is placed at a grid (c) is information "2", and a state in which the information dot is placed at a grid (d) is information "3".

Here, a region necessary for one symbol is a microcell, and 2-bit information can be recorded using four microcells as illustrated in Fig. 27. When compared with the ordinary two-dimensional code, a capacity of recording information is half, but a region necessary for an information dot is 1/4 of the ordinary two-dimensional code. That is, a 3/4 region can be used in an embedding target image, and also, as a whole, makes a gray scale uniform and is applied as an information embedded code.

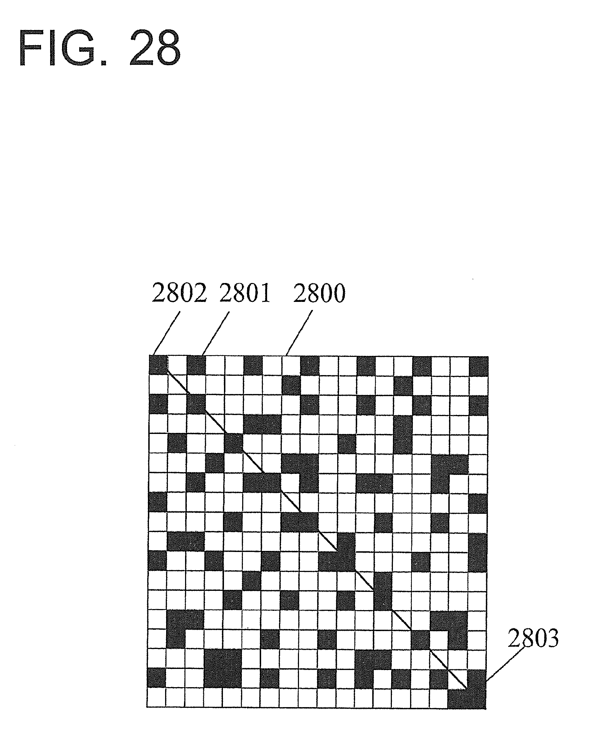

Fig. 28 illustrates a dot pattern of another mobile phone information embedded code.

As illustrated in Fig. 28, number 2800 is an information module configured by one $9 \times 9$ dot pattern, number 2801 is an information dot, number 2802 is a reference dot, number 2803 is a key dot, and the key dot serves to represent a direction of the information module and start and end positions of the information matrix and specify the reference dot at high speed.

The information module illustrated in Fig. 28 is configured by $7 \times 7$ dots. Among the forty nine dots, nine reference dots are needed so as to configure a 45-degree virtual reference line, and the remaining forty dots are present. Since 2-bit information can be written for each information dot, 80-bit information can be written using forty information dots. This is 1/2 of the capacity of the ordinary two-dimensional code that records 160-bit information, but the number of microcells required by the information dot is 1/4 of the ordinary two-dimensional code, and 3/4 of the area can be used for the target image to be embedded.

In addition, as compared with the ordinary two-dimensional code, the information embedded codes shown in Figs. 27 and 28 record information by different positions of the information dots. Therefore, with respect to the identification accuracy, the influence that the identification accuracy is lowered by the printing diffusion is reduced. Furthermore, it is effective to identify a long distance. A plurality of codes can be recognized at the same time. In a case where a lot of packing boxes are transported by a truck, all codes printed on the packing boxes can be read in a lump at the same time and recorded in a computer at the time of passing an entrance of a warehouse.

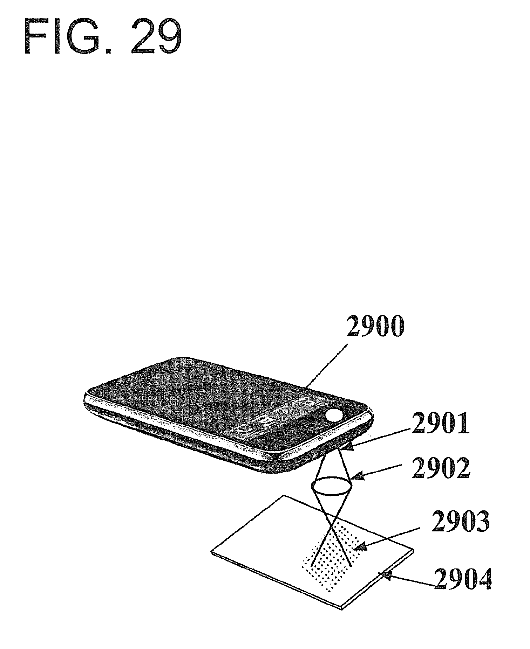

Fig. 29 illustrates a diagram of a mobile phone with a lens.

As illustrated in Fig. 29, 2900 is a mobile phone, 2901 is a lens of a mobile phone camera image sensor, 2902 is an additional lens, 2903 is a mobile phone information embedded code, and 2904 is a code embedding medium.

Here, the additional lens 2901 is installed in front of the lens of the mobile phone camera image sensor. The mobile phone information embedded code given on the code embedding medium 2904 is read by the mobile phone when passing through the additional lens 2901 in front of the lens of the mobile phone camera image sensor. By the geometric placement or the physical placement of the information dot with respect to a specified reference dot, the code value of the mobile phone information embedded code is recognized, based on the rule of configuring the dot pattern writing multi-bit information. Forgery prevention information or multimedia content can be called from the network, based on the code value.

Brief Description of the Drawings

Fig. 1 is a flowchart that illustrates a mobile phone information embedded code generation method.

Fig. 2 is a flowchart that illustrates a mobile phone information embedded code reading method.

Fig. 3 illustrates an explanatory diagram of some stacking-type two-dimensional codes that are not internationally prevalent at the present time.

Fig. 4 illustrates a diagram of some matrix-type two-dimensional codes that are not internationally prevalent at the present time.

Fig. 5 illustrates an explanatory diagram of two types of two-dimensional codes announced in China.

Fig. 6 illustrates a diagram of writing of multi-bit information by different directions.

Fig. 7 illustrates a diagram of recording of multi-bit information by different forms.

Fig. 8 illustrates a diagram of writing of information by a centralized grid and a distributed grid.

Fig. 9 illustrates a diagram of writing of multi-bit information by different positions and phase modulations.

Fig. 10 illustrates a diagram of information modules of horizontally/vertically integrated reference grids.

Fig. 11 illustrates a diagram of writing of information by a phase modulation (PM) of a physical form.

Figs. 12 illustrates diagrams for explaining a method of realizing dot patterns to maximize a printing area.

FIG. 13 illustrates a diagram of an application example of a mobile phone information embedded code to maximize a printing area.

Fig. 14 illustrates an example of an information embedded code of a general two-dimensional code.

Fig. 15 illustrates a diagram of a high-precision scan-prohibited color.

Fig. 16 illustrates a diagram of a digital forgery prevention principle.

Fig. 17 illustrates an example of performing information embedding by a printing density of different convex dots.

Fig. 18 illustrates an example of performing information embedding by a printing density of another different convex dot.

Fig. 19 illustrates an example of an information embedded code generation method using a laser marker.

Fig. 20 illustrates an example of a formation of a natural random variable information code.

Fig. 21 illustrates examples of a plurality of codes in which code values are determined by positions of optically readable materials.

Figs. 22-1 to 22-3 illustrate three examples for explaining a method for constructing a mobile phone information embedded code for multiple fonts.

Fig. 23 illustrates an example of a variable-length mobile phone information embedded code configured by $3 \times 3$ fonts illustrated in Fig. 22-1.

Fig. 24 illustrates an example of a set of variable-length mobile phone information embedded codes configured by $3 \times 3$ fonts illustrated in Fig. 22-2.

Fig. 25 illustrates an example of a variable-length mobile phone information embedded code configured by $2 \times 2$ fonts illustrated in Fig. 22-3.

Fig. 26 illustrates an example for explaining a method for constructing a code with another forgery prevention function.

Fig. 27 illustrates an example of writing information of a large-capacity dot pattern.

Fig. 28 illustrates a dot pattern of another mobile phone information embedded code.

Fig. 29 illustrates a diagram of a mobile phone with a lens.

**Claims**

1. A mobile phone information embedded code generation method, wherein
   a mobile phone information embedded code is configured from a dot pattern enabling multi-bit information to be written on the basis of the geometric placement or physical placement of an information dot relative to a specified reference dot,
   the mobile phone information embedded code configures:

   a dot pattern capable of writing information and printed or coated by a special ink, in which an RGB color space of an image scanned by at least one type of a scanner cannot be directly converted into a CMYK color space, the special ink including a thermal ink, a sun-sensitive color-changing ink, an OVI (optically variable) ink, a luminous ink, a water-sensitive color-changing ink, an infrared fluorescence ink, an ultraviolet fluorescence ink, a visible-light fluorescence ink, an ink of an absorption wavelength different from a background image, an ink of a reflection wavelength different from the background image, and an ink of a reflection angle different from the background image; or
   a dot pattern capable of writing information and printed by convex or concave point distributions of different densities; or
   a dot pattern capable of writing information and configured by strictly controlling one type of format among a diffusion direction of light, a reflection direction of light, and a refraction direction of light; or

a dot pattern capable of writing information and configured by a laser marker; or

a dot pattern capable of writing information and configured by a hologram; or

a dot pattern capable of writing scan-prohibited information when placing at least one type of viewer with respect to an image to be read, the viewer including one polarization plate, a micro lens, and an optical interference plate; and

an electronic file of an image for printing of the mobile phone information embedded code is configured by one type of an image format or a font format.

2. A horizontally-vertically integrated mobile phone information embedded code generation method, wherein a dot pattern configures one dot matrix, including a result of dot combination to minimize a printing area with respect to placement of different positions, placement of different phase modulations, or ordinary two-dimensional code, so as to record multibit information,

in a matrix arrangement of the dot pattern, a virtual reference line is horizontally and vertically integrated, and a reference dot is placed at regular intervals with respect to the virtual reference line, and

in the dot pattern, microcells capable of being placed in information dots are microcells surrounded by a center microcell.

3. An information embedding method of embedding a mobile phone information embedded code by a laser marker, wherein

a background configuring a mobile phone information embedded code by a laser marker device forms a background layer by a black ink, a temperature-sensitive ink, a sun-sensitive color-changing ink, an OVI (optically variable) ink, a luminous ink, a water-sensitive color-changing ink, an infrared fluorescence ink, an ultraviolet fluorescence ink, a visible-light fluorescence ink, an infrared absorption ink, an ultraviolet absorption ink, an ink of an absorption wavelength different from a background image, an ink of a reflection wavelength different from the background image, and an ink of a reflection angle different from the background image, and is a hologram, a metal, a glass, a paper, or a resin,

the background configuring the mobile phone information embedded code by the laser marker device is configured from a dot pattern capable of writing multibit information based on geometric placement or physical placement of information dot with respect to a specified reference dot, and

in the mobile phone information embedded code, an electronic file of an image for the laser marker device is configured by one type of an image format or a font format.

4. A reading method of a mobile phone information embedded code, wherein

an additional lens is provided in front of a camera lens of a mobile phone,

an image information-embedded by a mobile phone information embedded code is read through the additional lens, and

a code value of the mobile phone information embedded code is identified based on a rule of configuring a dot pattern writing multibit information by geometric placement or physical placement of information dot with respect to a specified reference dot.

5. The geometric placement described in claims 1, 3, and 4 has at least one type of geometric characteristic with respect to placement of information dot, the geometric characteristic including whether or not information dots are present, whether or not information dots are at different positions, whether or not information dots are in different directions, whether or not information dots have different shapes, whether or not information dots are different in number, whether or not information dots are different in size, centralized or dispersed distribution, and a placement of information dot configured by a combination of two-dimensional codes, thereby capable of writing information.

6. The physical placement described in claims 1, 3, and 4 has at least one type of physical characteristic with respect to placement of information dot, the physical characteristic including different phase modulation (PM) results of the information dot, different modulation (AM/FM) results of the information dot, different propagation directions of the information dot, different vectors of dynamics, and different frequencies of the information dot.

7. The mobile phone information embedded code generation method according to claims 1 and 2, wherein the mobile phone information embedded code configures a digitized anticounterfeit system by adding multiple forgery prevention dots to the dot pattern capable of writing the multibit information.

8. The mobile phone information embedded code generation method according to claims 1 and 2, wherein the mobile phone information embedded code configures a randomly placed dot pattern capable of writing one piece of information by mixing an ordinary ink with an optically readable material, coating the mixture on a printing medium, and printing a reference dot when processing a paper, the optically readable material including a plurality of small fibers, resin particles, and small foams.

# FIG. 1

```
              │
              ▼
┌──────────────────────────┐
│      DATA READING        │
└──────────────────────────┘
              │
              ▼
┌──────────────────────────┐
│     CODE CONVERSION      │
└──────────────────────────┘
              │
              ▼
┌──────────────────────────┐
│       INFORMATION        │
│    EMBEDDING OUTPUT      │
└──────────────────────────┘
```

# FIG. 2

```
        │
        ▼
┌──────────────────────┐
│    MOBILE PHONE      │
│   IMAGE READING      │
└──────────────────────┘
        │
        ▼
┌──────────────────────┐
│ INFORMATION EMBEDDED │
│  CODE RECOGNITION    │
└──────────────────────┘
        │
        ▼
┌──────────────────────┐
│  NETWORK CONNECTION  │
└──────────────────────┘
```

# FIG. 3

Code49

Code16K

Codeblock

PDF417

SuperCode

UltraCode

# FIG. 4

VeriCode

CPCode

DataMatrix

Code1

MaxiCode

ArrayTag

AztecCode

DataMatrix ECC200

QRCode

MicroQR

# FIG. 5

# FIG. 6

a　　　　b　　　　c　　　　d

# FIG. 7

a          b          c          d

# FIG. 8

801

802

a

b

# FIG. 9

a

b

c

d

e

f

# FIG. 10

$S_{11}$     $S_{12}$     $S_{13}$     $S_{14}$

$S_{21}$     $S_{22}$     $S_{23}$     $S_{24}$

$S_{31}$     $S_{32}$     $S_{33}$     $S_{34}$

$S_{00}$

$S_{41}$     $S_{42}$     $S_{43}$     $S_{44}$

# FIG. 11

a                b                c                d

# FIG. 12

(a)  (b)  (c)

(d)  (e)  (f)

(g)  (h)  (i)

# FIG. 13

# FIG. 14

# FIG. 15

# FIG. 16

# FIG. 17

1700    1702    1703                    1701

(a)

(b)

# FIG. 18

1800　　1802　　1803　　　　　　1801

(a)

(b)

# FIG. 19

# FIG. 20

$S_{11}$ $S_{12}$ $S_{13}$ $S_{14}$

$S_{21}$ $S_{22}$ $S_{23}$ $S_{24}$

$S_{31}$ $S_{32}$ $S_{33}$ $S_{34}$

$S_{41}$ $S_{42}$ $S_{43}$ $S_{44}$

$W_0$ $f_0$ $S_{00}$

# FIG. 21

(a)    (b)    (c)    (d)

(e)    (f)    (g)    (h)

(i)    (j)    (k)    (l)

(m)    (n)    (o)    (p)

# FIG. 22-1

2200  2202  2201

(a)

$S_{11}$  $S_{12}$  $S_{13}$

$S_{21}$  $S_{22}$  $S_{23}$

$S_{31}$  $S_{32}$  $S_{33}$

(b)

$S'_{11}$  $S'_{12}$  $S'_{13}$

$S'_{21}$  $S'_{22}$  $S'_{23}$

$S'_{31}$  $S'_{32}$  $S'_{33}$

# FIG. 22-2

2200'  2202'  2201'

(a)

$S_{11}$  $S_{12}$  $S_{13}$

$S_{21}$  $S_{22}$  $S_{23}$

$S_{31}$  $S_{32}$  $S_{33}$

(b)

$S'_{11}$  $S'_{12}$  $S'_{13}$

$S'_{21}$  $S'_{22}$  $S'_{23}$

$S'_{31}$  $S'_{32}$  $S'_{33}$  $S_{00}$

# FIG. 22-3

(a)

(b)

(c)

(d)

# FIG. 23

# FIG. 24

# FIG. 25

# FIG. 26

# FIG. 27

2701  2700

(a)          (b)          (c)          (d)

# FIG. 28

2802 2801  2800

2803

# FIG. 29

2900

2901

2902

2903

2904

## INTERNATIONAL SEARCH REPORT

| | International application No. |
|---|---|
| | PCT/JP2012/076555 |

**A. CLASSIFICATION OF SUBJECT MATTER**
*G06K19/06*(2006.01)i, *G06K1/12*(2006.01)i, *G06K7/10*(2006.01)i

According to International Patent Classification (IPC) or to both national classification and IPC

**B. FIELDS SEARCHED**

Minimum documentation searched (classification system followed by classification symbols)
G06K19/06, G06K1/12, G06K7/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2005-102264 A (Gu Zecang), 14 April 2005 (14.04.2005), paragraphs [0016] to [0063]; fig. 1 to 22 & CN 1598873 A | 1-8 |
| Y | WO 2010/018687 A1 (Think Laboratory Co., Ltd.), 18 February 2010 (18.02.2010), paragraphs [0009] to [0020], [0022] to [0058]; fig. 1 to 3, 4, 10 & EP 2312502 A1 & US 2011/0132986 A1 & CN 102099817 A & KR 10-2011-0042166 A | 1,3,5-8 |
| Y | JP 2011-25503 A (Toppan Printing Co., Ltd.), 10 February 2011 (10.02.2011), paragraphs [0010] to [0015], [0019] to [0052]; fig. 1, 5 to 6 (Family: none) | 1,3,5-8 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 January, 2013 (08.01.13) | 22 January, 2013 (22.01.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/076555

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2009/005070 A1 (Gu Zecang), 08 January 2009 (08.01.2009), paragraphs [0114] to [0119]; fig. 18 & CN 101101631 A | 2,7-8 |
| Y | JP 2007-206137 A (Marumi Koki Kabushiki Kaisha), 16 August 2007 (16.08.2007), paragraphs [0025] to [0055]; fig. 1 to 10 (Family: none) | 4-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005243047 A
- JP 2011198371 A
- JP 2006178692 A
- JP 2011186613 A
- JP 2008287414 A
- JP 2009104451 A
- JP 2008225732 A
- SE 0001895 W

- JP 2003012364 W
- JP 9172537 A
- JP 2003020967 A
- JP 3829143 B
- JP 4054339 B
- WO 3829143 A
- WO 4054339 A